(19) Europäisches Patentamt / European Patent Office / Office européen des brevets

(11) **EP 4 073 483 B1**

(12) **FASCICULE DE BREVET EUROPEEN**

(45) Date de publication et mention
de la délivrance du brevet:
**27.09.2023   Bulletin 2023/39**

(21) Numéro de dépôt: **20821206.8**

(22) Date de dépôt: **10.12.2020**

(51) Classification Internationale des Brevets (IPC):
**G01L 1/22** *(2006.01)*    **G01M 5/00** *(2006.01)*
**C04B 35/00** *(2006.01)*    **C04B 35/622** *(2006.01)*
**C04B 41/00** *(2006.01)*    **C04B 41/45** *(2006.01)*
**C04B 41/81** *(2006.01)*    **G01L 1/20** *(2006.01)*

(52) Classification Coopérative des Brevets (CPC):
(C-Sets disponibles)
**G01L 1/2287; C04B 35/00; C04B 35/62218;
C04B 35/62222; C04B 41/009; C04B 41/4535;
C04B 41/81; G01L 1/20; G01M 5/0033;
G01M 5/0083;** C04B 2111/94; C04B 2235/3206;
C04B 2235/3208; C04B 2235/3217;
C04B 2235/3241;                                         (Cont.)

(86) Numéro de dépôt international:
**PCT/EP2020/085636**

(87) Numéro de publication internationale:
**WO 2021/116348 (17.06.2021 Gazette 2021/24)**

(54) **CAPTEUR CERAMIQUE**

KERAMISCHER SENSOR

CERAMIC SENSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **11.12.2019   FR 1914148**

(43) Date de publication de la demande:
**19.10.2022   Bulletin 2022/42**

(73) Titulaire: **SAINT-GOBAIN CENTRE DE
RECHERCHES
ET D'ETUDES EUROPEEN
92400 Courbevoie (FR)**

(72) Inventeurs:
• **BOUSSANT-ROUX, Yves
84140 MONTFAVET (FR)**
• **MARGOSSIAN, Alexane
84210 PERNES-LES-FONTAINES (FR)**
• **HIS, Christian
84300 CAVAILLON (FR)**
• **MASSASSO, Giovanni
13300 SALON-DE-PROVENCE (FR)**
• **FREDERICH, Nadia
84800 LE PETIT PALAIS (FR)**
• **FOURCADE, Julien
13100 AIX EN PROVENCE (FR)**
• **VILLERMAUX, Franceline
84000 AVIGNON (FR)**
• **CHAMPION, Thibault Pierre Paul
84530 VILLELAURE (FR)**

(74) Mandataire: **Cabinet Nony
11 rue Saint-Georges
75009 Paris (FR)**

(56) Documents cités:
EP-A1- 1 340 970          FR-A1- 2 942 874
FR-A1- 3 062 385          US-A1- 2001 020 694
US-A1- 2009 121 374       US-A1- 2012 068 389

EP 4 073 483 B1

(52) Classification Coopérative des Brevets (CPC):
(Cont.)
C04B 2235/3244; C04B 2235/3418;
C04B 2235/3821; C04B 2235/383;
C04B 2235/3834; C04B 2235/386;
C04B 2235/3865; C04B 2235/3873; C04B 2235/40;
C04B 2235/402; C04B 2235/404; C04B 2235/405;
C04B 2235/407; C04B 2235/427; C04B 2235/524;
C04B 2235/5244; C04B 2235/5268;
C04B 2235/5288; C04B 2235/5292;
C04B 2235/5296; C04B 2235/5436;
C04B 2235/5445; C04B 2235/6025;

C04B 2235/616; C04B 2235/666; C04B 2235/96

C-Sets
**C04B 41/009, C04B 33/00;**
**C04B 41/009, C04B 35/00;**
**C04B 41/009, C04B 35/00, C04B 38/00;**
**C04B 41/009, C04B 35/80;**
**C04B 41/4535, C04B 41/4596, C04B 41/5025,**
**C04B 41/51**

## Description

### Domaine technique

L'invention concerne un capteur destiné au contrôle de l'état physique d'une pièce cible dans un environnement à une température supérieure à 400°C.

### Technique antérieure

Les capteurs acoustiques, les capteurs piézoélectriques et les capteurs résistifs, en particulier les capteurs comportant un pont de Wheatstone ou du type de ceux décrits dans WO2017/009256A1, sont utilisés pour précisément contrôler la déformation d'une pièce.

Ces capteurs de déformation ne résistent cependant pas à une température excédant 400°C, et notamment pour surveiller les pièces, en céramique ou en verre, couramment utilisées à une telle température. Il est possible de les refroidir, mais un tel refroidissement complexifie considérablement la mesure.

Par ailleurs, ces capteurs de déformation ne permettent pas de mémoriser physiquement l'occurrence d'une déformation anormalement élevée. Pour détecter une telle occurrence, il est donc nécessaire d'effectuer des mesures et de les analyser en continu. Un suivi continu n'est cependant pas toujours possible.

En outre, ces capteurs de déformation peuvent être difficiles à intégrer dans des emplacements exigus.

Ces capteurs de déformation ne permettent pas non plus de mesurer la fatigue de la pièce si cette fatigue n'a pas modifié la forme extérieure de la pièce.

Enfin, les propriétés de ces capteurs de déformation, et en particulier leur comportement dilatométrique, peut être incompatible avec la pièce à contrôler.

Il existe donc un besoin pour un capteur adapté pour le contrôle de l'état physique d'une pièce cible placée dans un environnement à une température supérieure à 400°C, et qui ne présente pas les inconvénients mentionnés ci-dessus.

US2001020694A1 et EP1340970A1 décrivent un capteur comportant une matrice céramique dans laquelle sont dispersées des particules en un matériau piézorésistif. US2009121374 décrit un procédé de fabrication d'un matériau piezoélectrique. FR3062385A1 décrit un produit fritté dense. FR2942874A1 divulgue un capteur qui comporte des couches céramiques entre lesquelles est disposée une couche contenant un fil replié plusieurs fois sur lui-même pour constituer une jauge de contrainte.

Un but de l'invention est de répondre, au moins partiellement, à ce besoin.

### Exposé de l'invention

### Résumé de l'invention

L'invention propose un capteur comportant :

- un ensemble de particules conductrices électriquement, au moins une partie des particules conductrices constituant un réseau conducteur dont une propriété électrique est fonction d'un agencement des particules conductrices constituant le réseau conducteur, ledit agencement étant modifiable, plus de 90% des particules conductrices, dites « particules conductrices allongées », en pourcentage en nombre, présentant un facteur de forme supérieur à 2 et de préférence une épaisseur inférieure à 20 000 nanomètres, de préférence inférieure à 1 000 nanomètres,

- une phase céramique de protection du réseau conducteur, la phase céramique étant de préférence constituée de particules céramiques, la phase céramique comportant de préférence plus de 90% de particules céramiques présentant une longueur comprise entre 0,1 et 100 $\mu$m, dites « particules céramiques fines », en pourcentage en nombre, les particules conductrices étant en un matériau présentant une résistivité électrique, mesurée à 20°C, inférieure à 1 m$\Omega$.m et le matériau de la phase céramique, de préférence des particules céramiques, présentant une résistivité électrique, mesurée à 20°C, supérieure à 1 m$\Omega$.m.

Comme on le verra plus en détail dans la suite de la description, l'agencement des particules conductrices du réseau conducteur peut être en particulier modifié sous l'effet d'une contrainte exercée sur une pièce cible sur laquelle est fixé le capteur, ou dans laquelle le capteur est intégré.

La mesure de ladite propriété électrique permet ainsi d'évaluer l'effet de cette contrainte, et en particulier une déformation ou une fatigue de la pièce cible. Le capteur permet notamment d'évaluer un endommagement de la pièce cible, et en particulier de détecter l'apparition de microfissures avant une rupture de la pièce cible ou de mesurer l'utilisation de la pièce cible.

De manière remarquable, la phase céramique, apte à résister à des températures élevées, protège le réseau conducteur des températures élevées, notamment supérieures à 400°C. Le capteur peut donc être utilisé dans des environnements à haute température. La phase céramique protège également le réseau conducteur de l'abrasion et des agressions chimiques.

La phase céramique peut prendre une forme quelconque, et en particulier la forme d'une matrice céramique liant les particules conductrices.

Par ailleurs, la plasticité du capteur peut être exploitée pour tracer l'occurrence de contraintes élevées exercées sur la pièce cible.

En outre, le capteur est peu coûteux à fabriquer et peu encombrant.

Enfin, la phase céramique améliore la compatibilité avec les pièces cibles en un matériau céramique ou vitrocéramique généralement utilisées dans les applications à haute température.

Dans un mode de réalisation particulièrement avantageux, le capteur prend la forme d'un fil, les particules conductrices étant au moins en partie fixées sur le fil ou incorporées dans le fil. On appelle « fil fonctionnalisé » un tel fil. Le fil comporte, outre les particules céramiques, d'autres constituants, au moins une partie, de préférence tous les autres constituants étant en un matériau céramique, de manière à constituer ladite phase céramique.

Dans un autre mode de réalisation particulièrement avantageux, le capteur prend la forme d'un assemblage de fils, ou « textile ». Le textile peut être par exemple sous la forme d'un non tissé, d'un tissé, ou d'un tricot.

Les particules conductrices peuvent être au moins en partie fixées sur au moins une partie desdits fils et/ou incorporées dans au moins une partie desdits fils, au moins une partie des fils, de préférence tous les fils étant au moins en partie, de préférence entièrement, en un matériau céramique, de préférence en silice, de manière à constituer ladite phase céramique. Dans un mode de réalisation, le textile résulte de l'assemblage de dits fils fonctionnalisés et de fils non fonctionnalisés, Dans un mode de réalisation, le textile résulte de l'assemblage de fils non-fonctionnalisés, puis d'un dépôt des particules conductrices sur l'assemblage de fils non fonctionnalisés, Toutes les techniques d'assemblage connues pour fabriquer un non tissé, un tissé, ou un tricot peuvent être envisagées.

De préférence, une matrice céramique est ensuite formée pour rigidifier et protéger le textile. Classiquement, une barbotine contenant des particules céramiques est appliquée sur le textile, ou le textile est imbibé d'une telle barbotine, puis l'ensemble subit un traitement thermique pour être fritté.

Dans un mode de réalisation, le textile est utilisé pour fabriquer un CMC. Toutes les technologies connues peuvent être mises en oeuvre à cet effet.

Un capteur sur l'invention peut encore comporter une ou plusieurs des caractéristiques optionnelles et préférées suivantes :

- plus de 90%, plus de 95%, plus de 99%, de préférence sensiblement 100% des particules conductrices allongées, en pourcentage en nombre, présentent un facteur de forme supérieur à 5, de préférence supérieur à 10, voire supérieur à 100 ou même supérieur à 1000, et/ou inférieur à 10 000 ;
- plus de 90%, plus de 95%, plus de 99%, de préférence sensiblement 100% desdites particules conductrices, de préférence plus de 90%, plus de 95%, plus de 99%, de préférence sensiblement 100% des particules conductrices allongées, en pourcentage en nombre, présentent chacune une épaisseur inférieure à 20000 nanomètres, de préférence inférieure à 18000 nanomètres, de préférence inférieure ou égale à 16000 nanomètres, de préférence inférieure à 15000 nanomètres, de préférence inférieure à 14000 nanomètres, voire inférieure à 12000 nanomètres, inférieure à 10000 nanomètres, ou même inférieure à 5000 nanomètres, de préférence inférieure 500 nanomètres, de préférence inférieure à 100 nanomètres, voire inférieure à 50 nanomètres, et/ou supérieure à 1 nm, ou à 10 nm ;

- au moins les particules conductrices allongées, de préférence toutes les particules conductrices, présentent une plus grande dimension inférieure à 20 microns ;

- au moins les particules conductrices allongées, de préférence toutes les particules conductrices, sont

  - des particules, de préférence des fibres, en un métal ou en un métalloïde, de préférence en Platine, et/ou
  - des nanotubes de carbone et/ou
  - des particules composites comportant un noyau central non conducteur, de préférence en céramique, en vitrocéramique ou en verre, revêtu d'un revêtement, au moins partiel, en un métal ou en un métalloïde, et/ou
  - des particules composites comportant un noyau central céramique fonctionnalisé dans la masse de manière à être conducteur électriquement ;

- dans un mode de réalisation préféré, le noyau central est constitué par une fibre ou un assemblage de fibres ;
- dans un mode de réalisation préféré, le noyau central est composé pour plus de 90%, de préférence pour plus de 95%, de préférence pour plus de 99%, de préférence pour sensiblement 100%, de silice, de préférence de silice amorphe ;
- au moins les particules conductrices allongées, de préférence toutes les particules conductrices, sont des particules composites qui comportent un noyau central non conducteur constitué d'au moins une fibre en un matériau oxyde comportant de préférence plus de 50%, de préférence plus de 60%, voire plus de 70%, voire plus de 80%, voire plus de 90% en masse d'$Al_2O_3$ et/ou de $SiO_2$ et/ou de $ZrO_2$, ou qui comportent un noyau central non conducteur constitué d'au moins une fibre en un matériau non oxyde, par exemple en SiC, en un autre carbure, par exemple en $B_4C$ ou en WC, en carbone, par exemple en graphite ou en graphène, en un nitrure, par exemple en AlN, ou en un oxynitrure ;
- au moins les particules conductrices allongées, de préférence sous la forme de fibres, de préférence sous la forme de dites particules composites, de préférence toutes les particules conductrices, sont intégrées dans ou fixées sur un fil, selon l'invention ;
- un fil fonctionnalisé présente une longueur supérieure à 50 mm, voire supérieure à 100 mm, voire supérieure à 1 m, supérieure à 10 m, supérieure à 100 m ou même supérieure à 1000 mètres et/ou inférieure à 10 000 m ;

- au moins les particules conductrices allongées, de préférence sous la forme de fibres ou de fils, de préférence sous la forme de dites particules composites, de préférence toutes les particules conductrices, sont incorporées dans un textile, en particulier d'un textile tissé, non tissé, tricoté ou tressé, de préférence sous la forme de fils fonctionnalisés sur lesquels lesdites particules conductrices sont fixées et/ou dans lesquels lesdites particules sont intégrées ;
- ledit textile ne comporte que des dits fils fonctionnalisés ;
- alternativement, ledit textile comporte des fils fonctionnalisés et des fils non-fonctionnalisés, c'est-à-dire des fils dépourvus de particules conductrices ;
- dans un mode de réalisation, les particules conductrices allongées, de préférence toutes les particules conductrices, comportent, de préférence sont constituées, pour plus de 80%, plus de 90%, plus de 95%, plus de 99%, de préférence sensiblement 100% de leur masse, en un ou plusieurs constituant(s) choisi(s) parmi les oxydes $SnO_2$ et $ZnO$, de préférence dopés par un ou plusieurs éléments choisis dans le groupe III du tableau périodique des éléments, en particulier Al, Ga, In, B ou dans le groupe IV du tableau périodique des éléments, en particulier les Si, Ge, Ti, Zr, Hf, voire dopés par l'élément F ;
- la phase céramique de protection forme une matrice céramique qui lie entre elles les particules conductrices, de préférence sous la forme de particules composites ou fixées ou intégrées dans des fils fonctionnalisés ;
- de préférence, la matrice céramique est composée pour plus de 90%, de préférence pour plus de 95%, de préférence pour plus de 99% d'oxydes, en pourcentage massique ;
- la phase céramique comporte, de préférence est constituée, pour plus de 80%, plus de 90%, plus de 95%, plus de 99%, de préférence sensiblement 100% de sa masse, d'un ou plusieurs composé(s) choisi(s) dans le groupe formé par $Al_2O_3$, $ZrO_2$, $Cr_2O_3$ ; MgO, CaO, $SiO_2$, SiC $\alpha$ ou $\beta$, BN, $B_4C$ ; C, en particulier sous forme de diamant, $Si_3N_4$, AlN et les oxynitrures de Silicium dont les SiAlON ;
- de préférence, en particulier si les particules conductrices allongées sont oxydables à 20°C, et en particulier si les particules conductrices allongées sont oxydables à toute température jusqu'à 1200°C, la phase céramique est en un matériau non oxyde, de préférence en diamant, et/ou en un carbure, de préférence comportant, en pourcentage massique, plus de 90%, de préférence sensiblement 100% de SiC $\alpha$ ou $\beta$, et/ou BN et/ou $B_4C$, et/ou en un nitrure, en particulier comportant, en pourcentage massique, plus de 90%, de préférence sensiblement 100% de $Si_3N_4$ et/ou AlN et/ou un ou plusieurs oxynitrures de Silicium dont les SiAlON ;
- les particules conductrices allongées, de préférence toutes les particules conductrices, comportent, de préférence sont constituées, pour plus de 80%, plus de 90%, plus de 95%, plus de 99%, de préférence sensiblement 100% de leur masse, en un ou plusieurs constituant(s) choisi(s) dans le groupe formé par Ag, Al, Au, Cu, Fe, Ge, Mo, Ni, Pd, Pt, Rh, Si, Ta, Ti, W, le graphite, le graphène, $TiB_2$, TiC, TiN, $ZrB_2$, ZrC, ZrN, $VB_2$, VC, VN, $CrB_2$, CrBN et WC ;
- les particules conductrices allongées, de préférence toutes les particules conductrices, sont en un matériau présentant une résistivité électrique inférieure à 0,5 m$\Omega$.m et, de préférence inférieure à $10^{-4}$ $\Omega$.m, de préférence inférieure à 1 $\mu\Omega$.m ;
- les particules céramiques fines, de préférence toutes les particules céramiques, sont en un matériau présentant une résistivité électrique supérieure à 10 m$\Omega$.m, de préférence supérieure à 100 m$\Omega$.m, de préférence supérieure à 1 $\Omega$.m, de préférence supérieure à 10 $\Omega$.m, de préférence supérieure à 100 $\Omega$.m, de préférence supérieure à 1000 $\Omega$.m ;
- les particules conductrices allongées, de préférence toutes les particules conductrices, sont en un matériau présentant une résistivité électrique inférieure à 1 $\mu\Omega$.m et, de préférence, les particules céramiques fines, de préférence toutes les particules céramiques, sont en un matériau présentant une résistivité électrique supérieure à 1000 $\Omega$.m ;
- les particules conductrices allongées, de préférence toutes les particules conductrices, sont réparties, de préférence de manière homogène, dans la phase céramique, la phase céramique étant de préférence continue, de préférence sous la forme d'une couche, ou les particules conductrices allongées, de préférence toutes les particules conductrices, sont réparties dans au moins une couche, dite « couche conductrice », et, de préférence, les particules céramiques de la phase céramique sont réparties dans au moins une couche, dite « couche céramique » ;
- lesdites couches conductrice et céramique sont superposées l'une à l'autre, et, de préférence s'interpénètrent partiellement ;
- les particules conductrices allongées, de préférence toutes les particules conductrices présentent une orientation préférentielle ;
- les particules céramiques fines, de préférence toutes les particules céramiques, présentent une orientation préférentielle qui, le cas échéant, peut être identique ou différente de l'orientation préférentielle des particules conductrices allongées ou de toutes les particules conductrices ;
- le réseau conducteur présente une orientation préférentielle, de préférence s'étend selon une direction préférentielle ou un plan préférentiel ;
- le réseau conducteur présente deux bornes de connexion destinées à la mesure de la propriété électrique entre lesdites bornes, ou forme un circuit fermé sur lui-même ;
- la phase céramique forme une couche continue, de préférence en contact avec le réseau conducteur, de préférence interposée entre le réseau conducteur et l'environnement extérieur du capteur ;

- le capteur comporte une phase céramique, par exemple fibreuse, dans laquelle ou sur laquelle les particules conductrices du réseau conducteur, de préférence des fibres métalliques, sont dispersées ;
- le capteur comporte, voire est constitué par un textile, les particules conductrices étant fixées sur des fils dudit textile et/ou intégrées dans des fils dudit textile et/ou constituant des fils dudit textile ;
- la phase céramique est frittée, c'est-à-dire présente une microstructure obtenue par frittage.

Dans un mode de réalisation, le capteur comporte, de préférence est constitué d'une ou plusieurs couches superposées, chaque couche étant un textile dans lequel au moins les particules conductrices allongées, de préférence toutes les particules conductrices,

sont des fibres disposées sans orientation préférentielle, par exemple sous la forme d'un textile non tissé, par exemple un feutre, ou

sont fixées sur et/ou intégrées dans des fils, de préférence orientés suivant au moins une orientation préférentielle, de préférence sous la forme d'un textile tissé, tricoté ou tressé.

De préférence, au moins une partie des fibres ou des fils comportent chacun un noyau central revêtu d'un revêtement conducteur. De préférence encore, la ou lesdites couches sont partiellement ou totalement noyée(s) dans une matrice constituée par la phase céramique de protection dudit réseau conducteur.

Dans un mode de réalisation, le capteur comporte, de préférence est constitué de première et deuxième couches superposées et formées par un agencement de premiers et deuxièmes fils respectivement, orientés suivant des première et deuxième orientations préférentielles respectivement, au moins une partie des premiers fils et au moins une partie des deuxièmes fils étant selon l'invention, les première et deuxième orientations préférentielles n'étant pas parallèles, le plus petit angle entre les première et deuxième orientations préférentielles étant de préférence supérieur à 30°, par exemple de 45° ou de 90° ; avantageusement, il est ainsi possible de détecter des contraintes selon chacune de ces différentes directions.

En particulier, les première et deuxième couches peuvent être des textiles tissés, et les directions des fils de trame des première et deuxième couches peuvent former entre elles un angle compris entre 30 et 60°, par exemple de 45°.

Selon un mode de réalisation particulier, la pièce cible est un CMC ou comprend un CMC, et le capteur est réalisé avec des particules conductrices composites, le noyau central des particules conductrices composites, de préférence sous la forme de fil et/ou de fibre, et/ou la phase céramique protectrice dudit capteur présentant de préférence la même composition que celle de fils et/ou de la matrice de ladite CMC.

L'invention concerne également un procédé de fabrication d'un capteur selon l'invention, destiné à la surveillance de l'état physique d'une pièce cible, le procédé comportant les étapes suivantes :

a) préparation d'une charge de départ

- sous une forme (a1) d'une barbotine comportant

  - des particules céramiques et/ou des précurseurs de particules céramiques, et
  - des particules conductrices et/ou des précurseurs de particules conductrices ; ou

- sous une forme (a2) d'une première barbotine comportant des particules céramiques et/ou des précurseurs de particules céramiques, et d'une deuxième barbotine, différente de la première barbotine, comportant des particules conductrices et/ou des précurseurs de particules conductrices ; ou
- sous une forme (a3) d'une poudre comportant

  - des particules céramiques et/ou des précurseurs de particules céramiques, et
  - des particules conductrices et/ou des précurseurs de particules conductrices ; ou

- sous une forme (a4) d'une première poudre comportant des particules céramiques et/ou des précurseurs de particules céramiques, et d'une deuxième poudre, différente de la première poudre, comportant des particules conductrices et/ou des précurseurs de particules conductrices ; ou
- sous une forme (a5) d'une barbotine comportant des particules conductrices et/ou des précurseurs de particules conductrices ; ou
- sous une forme (a6) d'une poudre comportant des particules conductrices et/ou des précurseurs de particules conductrices ; ou
- sous une forme (a7) d'une barbotine comportant des particules céramiques et/ou des précurseurs de particules céramiques, sur lesquelles des particules conductrices et/ou des précurseurs de particules conductrices sont fixées ; ou
- sous une forme (a8) d'une poudre comportant des particules céramiques et/ou des

précurseurs de particules céramiques, sur lesquelles des particules conductrices et/ou des précurseurs de particules conductrices sont fixées ;

b) mise en forme de la charge de départ de manière à obtenir une préforme, ladite mise en forme étant

(b1) par dépôt de la charge de départ, de préférence sous la forme d'une ou plusieurs couches, de préférence, lorsque la charge de départ est sous la forme (a1), (a2), (a5) ou (a7), par coulage en bande ou par pulvérisation, de préférence par coulage en bande, de préférence sur une épaisseur comprise entre 0,05 et 3 mm, sur un substrat, provisoire ou définitif, de préférence sur une pièce crue de la pièce cible ou sur la pièce cible, ou

(b2) par intégration de la charge de départ dans la masse d'un substrat, de préférence dans une pièce crue de la pièce cible ou dans la pièce cible, ou

de préférence, lorsque la charge de départ est sous la forme (a1), (a2) ou (a5), par imprégnation du substrat, ou

(b3) lorsque la charge de départ est sous la forme (a1), (a3), (a7) ou (a8), par mise en forme de la charge de départ sous la forme de la pièce cible ou d'une pièce crue de la pièce cible, puis, si la charge de départ mise en forme comporte une phase liquide, séchage de la charge de départ mise en forme;

c) consolidation thermique de la préforme, de préférence par frittage, de manière à obtenir une masse de mesure ;

d) optionnellement, fixation de la masse de mesure sur un support et/ou fixation d'une couche d'interfaçage sur la masse de mesure et/ou sur le support,

les particules céramiques, précurseurs de particules céramiques, particules conductrices et précurseurs de particules conductrices étant choisis de manière à obtenir, à l'issue de l'étape c) ou de l'étape d), un capteur selon l'invention,

le substrat pouvant optionnellement être séparé de la préforme après le séchage ou séparé de la masse de mesure après la consolidation.

Un procédé de fabrication d'un capteur selon l'invention peut encore comporter une ou plusieurs des caractéristiques optionnelles et préférées suivantes :

- la mise en forme de l'étape b) comporte une opération d'orientation des particules conductrices selon un plan préférentiel ou selon une direction préférentielle, de préférence au moyen d'un champ électrique ou magnétique ;
- la mise en forme de l'étape b) comporte une opération d'orientation des particules céramiques selon un plan préférentiel ou selon une direction préférentielle, de préférence par freeze casting, l'orientation des particules céramiques étant identique ou différente à l'orientation préférentielle éventuelle des particules conductrices ;
- le substrat est un corps poreux présentant une porosité ouverte de préférence supérieure à 30% en volume, de préférence supérieure à 40%, et/ou de préférence inférieure à 70%, voire inférieure à 60%, en volume ;
- le substrat est un corps poreux comportant des pores orientés présentant de préférence une épaisseur supérieure à 50 nm et inférieure à 1 $\mu$m, et une largeur inférieure ou égale à 10 $\mu$m ;
- le substrat est fibreux ;
- à l'étape b),

  - on dépose, sur des pores à l'intérieur du corps poreux, des précurseurs de particules métalliques ou des précurseurs de particules conductrices en un matériau céramique, puis on réduit thermiquement ou chimiquement lesdits précurseurs pour constituer les particules conductrices, ou
  - on dépose, sur des pores à l'intérieur du corps poreux, une barbotine constituée de particules métalliques ou de particules conductrices en un matériau céramique, en suspension dans un solvant, puis on évapore le solvant,

  de manière à constituer un réseau conducteur ;
- après dépôt des particules conductrices, on dépose une couche en un matériau céramique sur le réseau conducteur, et, de préférence, on fritte ladite couche, de préférence à une température inférieure à 1600°C, de préférence inférieure à 1500°C de préférence sous atmosphère non oxydante, de préférence par SPS.

L'invention concerne aussi un dispositif comportant une pièce cible et un capteur selon l'invention fixé sur la pièce cible ou intégré dans la pièce cible, pour que l'agencement des particules conductrices du réseau conducteur se modifie sous l'effet d'une contrainte appliquée sur la pièce cible.

Un dispositif sur l'invention peut encore comporter une ou plusieurs des caractéristiques optionnelles et préférées suivantes :

- les particules conductrices et la phase céramique présentent la forme de couches différentes et superposées ;
- la pièce cible présente une porosité ouverte, en volume, supérieure à 1%, supérieure à 3%, à 5% ou à 10%, et les particules conductrices du réseau conducteur sont fixées à la surface de pores ouverts en surface et/ou dans la masse de la pièce cible ;
- le réseau conducteur est recouvert, au moins partiellement, de préférence complètement, d'une phase céramique sous la forme d'une couche ;
- la pièce cible présente une porosité ouverte orientée de manière préférentielle parallèlement à un plan préférentiel ou à une direction préférentielle ;
- la pièce cible est une pièce fragile ;
- la pièce cible est en un matériau céramique et/ou en un verre et/ou en une vitrocéramique et/ou en un « Composite à Matrice Céramique », ou « CMC » ;

- la pièce cible est choisie dans un groupe constitué par une tuile réfractaire, une pièce céramique d'un absorbeur solaire, un support de cuisson, un bloc réfractaire de four, une pièce de protection contre l'abrasion, un abrasif aggloméré, un outil de coupe en céramique, un élément de pompe ou de circuit hydraulique en céramique, un support ou un tube isolant électrique en céramique, un carreau céramique ou une pièce céramique ou vitrocéramique de parement, une plaque, un tube comprenant un matériau vitrocéramique, une plaquette ou un disque de frein ou un objet en céramique d'un dispositif de freinage, un vitrage, un filtre pour la filtration liquide ou gazeuse, un radôme ;

- le réseau conducteur s'étend dans une phase liante qui lie des grains de la pièce cible, de préférence des grains en un matériau réfractaire, de préférence en un matériau céramique, par exemple des grains abrasifs, la phase liante pouvant en particulier résulter d'un frittage d'une pièce crue de la pièce cible, par exemple d'un frittage réactif.

L'invention concerne encore un procédé de fabrication d'un dispositif selon l'invention destiné à la surveillance de l'état physique d'une pièce cible, le procédé comportant une fixation du capteur selon l'invention sur la pièce cible ou une intégration du capteur dans la pièce cible.

Par ailleurs, l'invention concerne un procédé de surveillance de l'état physique d'une pièce cible, ledit procédé comportant les étapes suivantes :

1) à un instant initial, fixation d'un capteur selon l'invention sur la pièce cible ou intégration d'un capteur selon l'invention dans la pièce cible, de manière à constituer un dispositif selon l'invention ;
2) calibration du dispositif de manière à déterminer une relation entre ledit état physique et une propriété électrique du réseau conducteur du capteur ;
3) mise en service du dispositif dans un environnement à une température de service, puis, à un instant actualisé, mesure de ladite propriété à ladite température de service et, à partir de ladite relation, détermination dudit état physique à l'instant actualisé.

Un procédé de surveillance selon l'invention peut encore comporter une ou plusieurs des caractéristiques optionnelles et préférées suivantes :

- la température de service est supérieure à 400°C, à 500°C, à 600°C, ou à 700°C, et/ou inférieure à 1500°C ;
- la calibration est effectuée à partir de mesures de la propriété électrique réalisées à ladite température de service ;
- la détermination dudit état physique comprend une détection d'une microfissuration et/ou une détection ou une mesure d'une fatigue de la pièce cible ;

- l'étape 3) est renouvelée, deux instants actualisés successifs étant par exemple séparés de plus de 1 minute, 1 heure, une journée, ou une semaine ;
- à l'étape 3), on mesure ladite propriété sans contact avec le réseau conducteur du capteur ;
- à l'étape 3), en fonction de ladite mesure de ladite propriété :

on détecte un choc mécanique subi, avant l'étape 3), par la pièce cible, par exemple pendant un transport de ladite pièce cible, et/ou on mesure une amplitude dudit choc mécanique ;
on détecte une contrainte thermomécanique subie, avant l'étape 3), par la pièce cible et/ou on mesure une amplitude de ladite contrainte thermomécanique ;
on détecte et/ou on mesure un ensemble de contraintes subies par la pièce cible et ayant conduit à une fatigue de la pièce cible sans microfissuration ;

- ladite propriété est une impédance, de préférence une résistance électrique.

L'invention concerne encore un kit, en particulier pour la mise en oeuvre d'un procédé de surveillance selon l'invention, ledit kit comportant un dispositif selon l'invention et un appareil de mesure adapté pour mesurer, de préférence sans contact, ladite propriété élastique à l'étape 3).

## Définitions

Par « céramique », on entend un produit qui n'est ni métallique, ni organique. Dans le cadre de la présente invention, le diamant, le graphite, le graphène, les carbures et les cermets sont considérés comme des matériaux céramiques. Un matériau minéral de structure amorphe non métallique, par exemple un verre de silice, est considéré comme une céramique.

Sauf indication contraire, les « particules céramiques » sont les particules céramiques de la phase céramique. En particulier, les particules conductrices peuvent être en un matériau céramique mais ne sont pas qualifiées dans la présente description de « particules céramiques ».

Les « particules » sont des éléments qui ne forment pas un film continu ou une masse continue, mais peuvent être distinguées les unes des autres. Une particule peut être très fine.

Les dimensions d'une particule sont sa longueur, sa largeur et son épaisseur.

La « longueur » L ou « taille » d'une particule est sa plus grande dimension observable sur un cliché pris suivant une direction perpendiculaire au plan sur lequel repose ladite particule.

La « largeur » W1 et « l'épaisseur » W2 d'une particule sont les longueurs des grand et petit axes, respectivement, de l'ellipse la plus petite possible dans laquelle peut être inscrite la section transversale médiane (section à mi-longueur et prise perpendiculairement à la direction de la longueur) de ladite particule.

Une particule présente une forme en «bâtonnet» lorsqu'elle respecte les trois conditions suivantes :

1)

$$4 \leq L/W \leq 10 \text{ et } W = (W1+W2)/2,$$

2)

$$4 \leq L/W1,$$

et
3)

$$W2 < 1{,}5.W1.$$

Une particule présente une forme en «plaquette» lorsqu'elle respecte les deux conditions suivantes :

1)

$$4 \leq L/W1,$$

et
2)

$$W2 \geq 1{,}5 \ W1,$$

de préférence $W2 \geq 2 \ W1$.

De préférence, la section transversale d'une plaquette est sensiblement constante sur toute la longueur de la plaquette, est sensiblement polygonale et comporte au moins 4 côtés.

Le « facteur de forme » d'une particule est le rapport de sa longueur sur son épaisseur.

L'agencement des particules conductrices est « modifiable » lorsque, dans l'utilisation prévue, lesdites particules conductrices peuvent, au moins pour une partie d'entre elles, se rapprocher ou s'écarter, ce qui modifie une propriété électrique du réseau conducteur, en particulier sa résistance.

La seule modification de l'agencement des particules conductrices du réseau conducteur suffit ainsi à modifier la propriété électrique du réseau conducteur.

On distingue les « particules » du capteur et les « grains » de la pièce cible. Cette distinction n'est effectuée qu'à des fins de clarté. En particulier, dans un mode de réalisation, les grains de la pièce cible peuvent constituer les particules céramiques du capteur.

Un « substrat » est un support qui porte plusieurs particules conductrices. Un fil sur lequel sont fixées plusieurs particules conductrices, ou dans lequel sont intégrées plusieurs particules conductrices, de préférence sous la forme de fibres, est un exemple de substrat.

Un « fil » ou un filament présente classiquement une longueur supérieure 5 mm, supérieure à dix fois son épaisseur et supérieure à dix fois sa largeur. Un fil peut être constitué par un assemblage de filaments et/ou de particules sous la forme de fibres.

On appelle « fibre » une particule dont la longueur est supérieure à cinq fois l'épaisseur et supérieure à cinq fois la largeur.

Une particule est considérée comme « multifacettée » lorsqu'elle présente au moins 2 facettes, une facette étant une surface délimitée par une arête. Une forme « en noix » est un exemple de forme à deux facettes.

On appelle « précurseurs de particules céramiques » et « précurseurs de particules conductrices » des constituants de la charge de départ qui, lors de la fabrication d'un capteur selon l'invention, conduisent à des particules céramiques et à des particules conductrices, respectivement.

Un précurseur de métal est un constituant de la charge de départ qui, lors de la fabrication d'un capteur selon l'invention, conduit à ce métal.

Un ensemble de particules ou de pores présente une « orientation préférentielle » lorsque l'orientation de ces particules ou de ces pores n'est pas aléatoire. En particulier, les particules ou les pores peuvent être orientées selon un plan préférentiel, par exemple être empilées sous forme de couches, ou selon une direction préférentielle, par exemple lorsque leurs axes longitudinaux sont orientés sensiblement parallèlement les uns aux autres.

Un ensemble de fibres ou de fils présente une « orientation préférentielle » ou « direction préférentielle » lorsque l'orientation de ces fibres ou de ces fils n'est pas aléatoire. Par exemple, dans un textile tissé, il existe classiquement deux orientations préférentielles, classiquement à 90° l'une de l'autre.

On appelle « barbotine » un milieu liquide ou sous forme de gel contenant, dispersées, des particules et/des précurseurs de particules, par exemple sous forme ionique.

Le réseau conducteur présente une « orientation préférentielle » lorsqu'il ne s'étend pas de manière aléatoire. En particulier, le réseau conducteur peut s'étendre dans un plan préférentiel ou selon une direction préférentielle.

La mesure de la porosité ouverte, ou porosité apparente, peut être déterminée par la méthode d'Archimède, par exemple selon la méthode ISO18754.

La porosité totale, en pourcentage, est classiquement égal à 100 * (1 - le rapport de la densité géométrique divisée par la densité absolue). La valeur de densité absolue, exprimée en g/cm$^3$, est classiquement mesurée en divisant la masse d'un échantillon par le volume de cet échantillon broyé de manière à sensiblement supprimer la porosité. En l'occurrence, le broyage est adapté de manière à réduire l'échantillon à une poudre dont les particules présentent une taille inférieure à 40 micromètres. La densité absolue peut être mesurée par pycnométrie hélium au moyen d'un appareil Accupyc II 1340 de chez Micromeritics. La norme utilisée par le fabricant est l'ASTM C604 - 02(2012).

On appelle « pore tubulaire » un pore qui présente la forme générale d'un tube débouchant par une de ses deux extrémités (« pore borgne ») ou par ses deux extrémités (« pore traversant »). La direction d'un pore tubulaire tronconique est qualifiée de « direction longitudinale » du pore.

Le caractère « tubulaire » d'un pore peut être déterminé par observation de photographies des pores, en particulier en perspective ou en coupe longitudinale.

Un pore tubulaire tronconique est dit « macroscopique », ou appelé « macropore » s'il présente une section transversale médiane (à mi-longueur) présentant un diamètre équivalent supérieur à 0,15 $\mu$m et inférieur à 450 $\mu$m.

On appelle « diamètre équivalent » de l'ouverture ou d'une section d'un pore le diamètre d'un disque de même surface que ladite ouverture ou que ladite section.

Une « pièce crue » de la pièce cible est une pièce qui présente sensiblement la forme de la pièce crue et qui, lors d'un frittage, conduit à ladite pièce cible.

Par « pièce fragile », on entend une pièce en un matériau dont le domaine de déformation plastique sous charge avant rupture représente moins de 1% du domaine de déformation élastique, de préférence est sensiblement nul. Autrement dit, la largeur de la plage des contraintes conduisant à une déformation plastique sans rupture représente moins de 1% de la largeur de la plage des contraintes conduisant à une déformation élastique.

Un matériau peut être composite ou monolithique selon qu'il comporte ou non des fibres. En particulier, il peut être un « Composite à Matrice Céramique », ou « CMC », c'est-à-dire en un produit composé de fibres liées entre elles par une matrice céramique.

L'homme du métier sait mesurer la déformation d'une pièce. En particulier, il sait que la charge est appliquée en compression pour un matériau monolithique et en traction pour un composite céramique fibreux, notamment un CMC, l'allongement étant classiquement mesuré dans le sens des fibres.

« L'intégration » du capteur dans la pièce cible consiste à incorporer physiquement ce capteur dans cette pièce, par exemple en utilisant, à titre de phase céramique, une phase liante de cette pièce, ou en formant le capteur dans la porosité de la pièce cible. Le capteur ne peut donc être isolé sans affecter l'intégrité de la pièce cible.

On appelle « bloc », une pièce présentant une masse supérieure à 20 g, de préférence supérieure à 50 g, voire supérieure à 100 g. On appelle « plaque », une pièce dont la largeur est supérieure à cinq fois l'épaisseur.

Par « contrainte », on entend une sollicitation exercée sur une pièce cible, par exemple une sollicitation mécanique comme un choc ou thermique (par exemple un choc ou un gradient thermique) ou thermomécanique, une sollicitation chimique ou de corrosion, une force ou un moment de force. La contrainte peut être à la fois d'origine thermique et d'origine mécanique lorsque des sollicitations thermiques sont associés à des sollicitations mécaniques, par exemple en cas de fluage en température sous charge.

Une contrainte peut avoir un effet provisoire ou définitif sur la pièce cible. Par extension, on appelle « contrainte » l'intensité de cette sollicitation par rapport à la surface de la pièce concernée. Les contraintes Ca, Cs et Ce$_{min}$ ou les contraintes Cr et Cs', définies ultérieurement, sont appliquées de la même façon sur la pièce cible. Par exemple, si la contrainte est une action mécanique, cette action est appliquée au même endroit de la pièce cible, suivant la même direction, seule l'intensité de cette action étant éventuellement différente pour Ca, Cs et Ce$_{min}$.

L'invention présente un intérêt tout particulier pour les pièces fragiles en un matériau très rigide et très résistant mécaniquement, notamment dont le rapport MOE/ MOR est supérieur à 100, où MOE est le module d'Young et MOR est le module de rupture, exprimés en MPa dans les conditions de charge décrites précédemment, selon que le matériau est monolithique ou composite fibreux en particulier.

« L'état physique » d'une pièce peut être par exemple « état endommagé » ou « état intègre ». Il peut aussi être plus précis. Par exemple, il peut être « état peu endommagé », « état moyennement endommagé » ou « état fortement endommagé ».

« L'endommagement » d'une pièce cible est une conséquence irréversible de l'application d'une contrainte sur la pièce cible. L'endommagement peut en particulier se traduire par des microfissures ou par une fatigue.

Des microfissures conduisent à une modification du volume de la pièce cible, qui elle-même peut produire une déformation d'un capteur selon l'invention.

Une fatigue, ou « vieillissement », de la pièce cible résulte de son utilisation antérieure et/ou du temps qui s'écoule. Elle ne conduit pas nécessairement à une déformation de la pièce cible. En revanche, elle se traduit par une modification du réseau conducteur, notamment du fait que des « ponts » entre des particules conductrices peuvent se rompre par vieillissement, ce qui modifie les propriétés électriques du réseau conducteur.

Toute contrainte produisant un endommagement est appelée « contrainte d'endommagement ».

La contrainte d'endommagement qui présente l'intensité la plus faible est dite « contrainte d'endommagement minimale ».

Par « propriété électrique » d'un réseau conducteur, et par extension, d'un capteur, on entend une caractéristique de ce capteur qui est fonction de l'impédance du réseau conducteur. Classiquement, la propriété du capteur, par exemple sa résistance (ou de manière équivalente sa résistivité), peut être mesurée électriquement.

Sauf indication contraire, la « résistance » est une résistance électrique, mesurée en Ohms.

La résistivité électrique est mesurée selon la norme ASTM F76. Sauf indication contraire, les résistivités sont mesurées la température de 20°C.

« Comporter », « présenter » ou « comprendre » doivent être interprétés de manière large, non limitative.

**Brève description des dessins**

D'autres caractéristiques et avantages de l'invention apparaîtront encore à la lecture de la description détaillée qui va suivre et à l'examen du dessin annexé dans lequel

- la figure 1 [Fig 1] illustre schématiquement un kit selon l'invention comportant un dispositif selon l'invention ;
- la figure 2 [Fig 2] illustre schématiquement un premier exemple de capteur selon l'invention ;
- la figure 3 [Fig 3] illustre schématiquement un deuxième exemple de capteur selon l'invention ;
- la figure 4 [Fig 4] illustre schématiquement le fonctionnement un dispositif selon l'invention.

Dans les différentes figures, des références identiques sont utilisées pour désigner des organes identiques ou analogues.

**Description détaillée**

*Capteur*

Un capteur 2 selon l'invention comporte un ensemble de particules conductrices électriquement 4, au moins une partie des particules conductrices étant en contact électrique de manière à constituer un réseau conducteur tridimensionnel 7 dont une propriété électrique est fonction d'un agencement des particules conductrices constituant le réseau conducteur.

Le capteur 2 comporte également une phase céramique 4 qui protège le réseau conducteur 7 de l'environnement extérieur.

De préférence, le rapport volumique « réseau conducteur / phase céramique » est supérieur ou égal à 1% et/ou inférieur à 30%, de préférence inférieur à 25%, de manière plus préférée inférieur à 20%, voire inférieur à 15% ou même inférieur à 10%. Avantageusement, le réseau conducteur électriquement est alors sensible aux microdéformations tout en restant protégé par la phase céramique.

Le réseau conducteur 7 est constitué d'un ensemble de particules conductrices qui n'est pas rigide, mais autorise un déplacement de particules conductrices par rapport à des particules conductrices adjacentes, et/ou une modification de l'orientation des particules conductrices. Des « ponts conducteurs » entre particules conductrices peuvent être ainsi créés ou détruits selon que des particules conductrices entrent en contact avec d'autres particules conductrices ou que de tels contacts sont rompus.

Sous l'effet d'une contrainte, l'agencement des particules conductrices du réseau conducteur, et donc le nombre et/ou la qualité des contacts entre les particules conductrices du réseau conducteur, sont modifiés. Il en résulte une modification de l'impédance, et en particulier de la résistance électrique du réseau conducteur 7.

La modification de la géométrie du capteur, et plus précisément de l'agencement des particules conductrices du réseau conducteur, peut en particulier résulter de son écrasement, de son étirement, de sa flexion ou de sa mise en rotation.

Le réseau conducteur 7 est dit « percolant », c'est-à-dire qu'il autorise en permanence un passage de courant entre deux points d'extrémité prédéterminés ou en boucle fermée.

Ainsi, dans un mode de réalisation, le réseau conducteur 7 forme un circuit conducteur électriquement, fermé sur lui-même. Le capteur peut alors fournir une information sans être connecté physiquement à une source d'énergie électrique. En particulier, la circulation d'un courant peut être réalisée au moyen d'un champ magnétique. Un appareil de mesure peut alors mesurer l'impédance électrique du circuit et ses variations.

Toutes les particules conductrices 4 ne font pas nécessairement partie du réseau conducteur 7. Des particules conductrices peuvent être en effet isolées du réseau conducteur. Les particules qui font partie du réseau conducteur sont modifiées en fonction des contraintes subies par le capteur. En particulier, sous l'effet de la fatigue, des particules peuvent se détacher du réseau conducteur.

De préférence, au moins les particules conductrices allongées, de préférence toutes les particules conductrices, présentent une orientation préférentielle.

De préférence, au moins les particules céramiques fines, de préférence toutes les particules céramiques présentent une orientation préférentielle, identique ou différente de celle des particules conductrices ou des particules conductrices allongées.

Une orientation préférentielle permet avantageusement un comportement anisotrope. En particulier, la réaction du capteur à une déformation peut dépendre de la façon dont cette déformation se réalise. Par exemple, la propriété mesurée au moyen du capteur peut être fortement modifiée lorsque la déformation est réalisée suivant un axe, par exemple perpendiculairement à la direction préférentielle, et être faiblement modifiée lorsque la déformation est réalisée suivant la direction préférentielle.

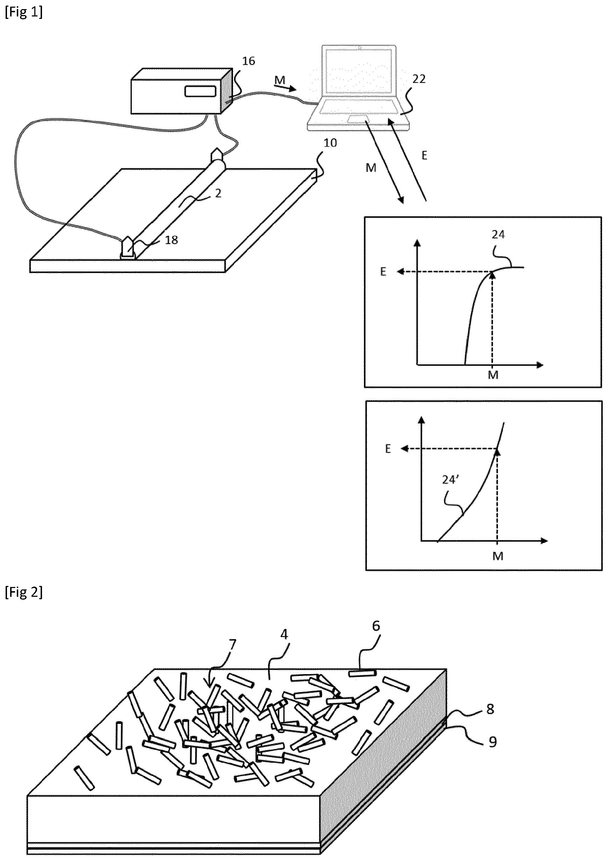

Selon un premier mode de réalisation principal, le capteur 2 comporte une phase céramique 4 dans laquelle sont dispersées des particules conductrices électriquement 6, comme illustré sur la figure 2. De préférence, les particules conductrices sont distribuées de manière uniforme dans la phase céramique, qui forme une « matrice céramique ».

Dans le premier mode de réalisation principal, le capteur 2 peut comporter une couche au sein de laquelle les particules céramiques et les particules conductrices sont distribuées de manière uniforme. L'épaisseur de la couche est de préférence comprise entre 0,05 mm et 3 mm, de préférence entre 0,1 mm et 1 mm.

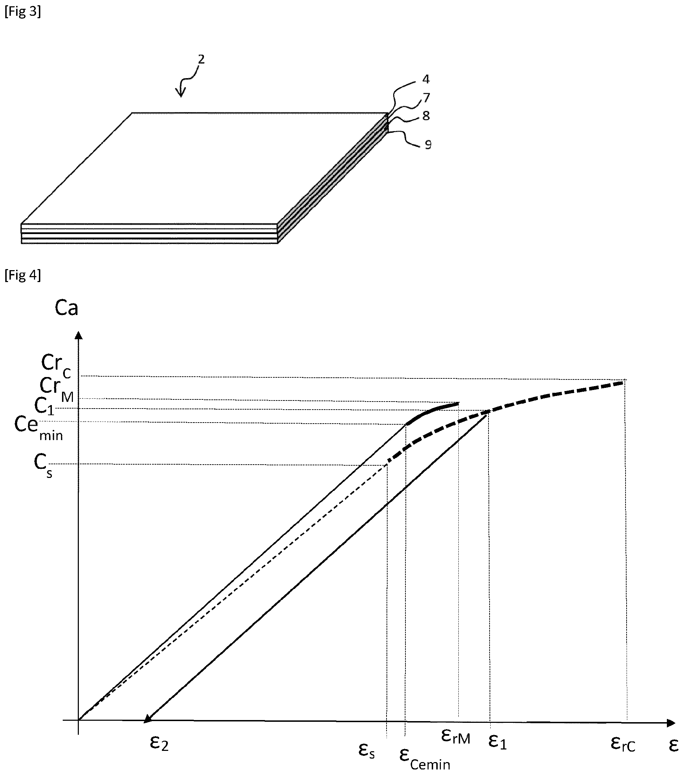

Selon un deuxième mode de réalisation principal, illustré sur la figure 3, le capteur 2 comporte une couche céramique formant une phase céramique 4, de préférence isolante électriquement, et une couche conductrice dans laquelle sont dispersées des particules conductrices électriquement 6 (non représentées) de manière à former le réseau conducteur 7. Les couches céramique et conductrice sont superposées l'une à l'autre, comme illustré sur la figure 3. De préférence, la couche céramique recouvre la couche conductrice, ce qui lui permet de la protéger efficacement de la température et de l'abrasion.

Le deuxième mode de réalisation principal est particulièrement avantageux pour le contrôle d'une pièce cible de nature poreuse ou fibreuse. Il permet en particulier de percevoir précisément les contraintes subies par la pièce cible.

Le nombre de dites couches n'est pas limitatif.

Dans le deuxième mode de réalisation principal, le capteur comporte donc une pluralité de couches céramique(s) et conductrice(s) superposées, chaque couche comportant des particules céramiques ou des particules conductrices, de préférence distribuées de manière uniforme.

Dans un troisième mode de réalisation principal, le capteur est intégré dans la pièce cible. Autrement dit, le capteur est indissociable de la pièce cible.

Dans un mode de réalisation, le capteur est passif, c'est-à-dire qu'il ne comporte aucune source d'énergie électrique.

Le réseau conducteur peut former un circuit conducteur électrique fermé sur lui-même, de préférence conformé pour être lisible par induction magnétique.

Selon un mode de réalisation, le capteur nécessite d'être connecté à une source d'énergie électrique. Il comporte de préférence, de préférence aux points d'extrémité du réseau conducteur, des bornes de connexion 18 prévues pour faciliter le branchement de cette source d'énergie électrique, en particulier d'un appareil de mesure 16.

*Particules conductrices*

Le réseau conducteur 7 est constitué de particules conductrices 6.

Une particule conductrice 6, et en particulier une particule conductrice allongée, peut être constituée en un unique matériau conducteur, par exemple en cuivre ou en platine.

Une particule conductrice 6, et en particulier une particule conductrice allongée, peut être alternativement une particule « fonctionnalisée », rendue ainsi conductrice.

En particulier, elle peut être constituée d'un noyau central non conducteur, de préférence en un matériau céramique, notamment en un matériau cristallisé, une vitrocéramique ou un verre, de préférence sous la forme d'une fibre, le noyau central étant revêtu d'un revêtement électriquement conducteur, par exemple un revêtement inorganique, en particulier un revêtement de cuivre, de platine, d'argent, de nickel, ou à base de carbure ou de borure de Titane. Tous les procédés de fonctionnalisation peuvent être envisagés.

En particulier, il est possible de déposer un précurseur d'un métal, par exemple de déposer un sel métallique inorganique ou un composé organométallique, ou d'utiliser une voie sol-gel à partir d'un alcoolate, puis de procéder à une réduction vers l'état élémentaire du métal, par exemple par traitement thermique ou réaction chimique avec un agent réducteur. De préférence, on dépose un sel organique soluble dans l'eau et qui se dissocie pour former un cation libre. Le dépôt peut être notamment par pulvérisation, par trempage, par imprégnation ou en phase gazeuse.

Il est aussi possible de déposer des nanoparticules conductrices sur le noyau central, par exemple par chimisorption après silanisation du noyau central, par physisorption ou par attraction électrostatique.

La présence d'un noyau central permet avantageusement de modifier les propriétés, et en particulier le comportement dilatométrique de la particule conductrice.

Une particule conductrice 6 peut être encore constituée d'un noyau central non conducteur dans lequel sont dispersées des nanoparticules conductrices conférant la propriété de conductivité électrique.

L'épaisseur et/ou la largeur desdites particules conductrices est inférieure à 20 000 nanomètres, de préférence inférieure à 18 000 nanomètres, de préférence inférieure ou égale à 16 000 nanomètres, de préférence inférieure à 15 000 nanomètres, de préférence inférieure à 14 000 nanomètres, voire inférieure à 12 000 nanomètres, ou inférieure à 10 000 nanomètres, inférieure à 5 000 nanomètres, inférieure à 1000 nanomètres, de préférence inférieure à 500 nanomètres, de préférence inférieure à 100 nanomètres, voire inférieure à 50 nanomètres.

La longueur desdites particules conductrices est de préférence supérieure à 20 nanomètres, de préférence supérieure à 50 nanomètres, voire supérieure à 100 nanomètres, et/ou inférieure à 1000 nanomètres, voire inférieure à 500 nanomètres.

Dans un mode de réalisation, la longueur des particules conductrices est supérieure à 500 nanomètres, supérieure à 1 micron, supérieure à 10 microns, supérieure à 100 microns, supérieure à 1 mm, supérieure à 10 mm, supérieure à 100 mm, supérieure à 1 m, supérieure à 3 m, supérieure à 5 m, et/ou inférieure à 100 m, inférieure à 10 m. Ces particules conductrices présentent alors la forme de fils ou de filaments, qui peuvent être en un matériau conducteur électriquement ou composites, avec un noyau central non conducteur électriquement et un revêtement, de préférence continu, conducteur électriquement.

De préférence, pour plus de 90%, plus de 95%, plus de 99%, de préférence sensiblement 100% des particules conductrices, en pourcentage en nombre, le facteur de forme est supérieur à 5, de préférence supérieur à 10, voire supérieur à 100 ou même supérieur à 1000.

Dans un mode de réalisation préféré, les particules conductrices sont de forme aciculaire, de préférence ce sont des fibres, de préférence des fibres dont la longueur est supérieure à dix fois l'épaisseur et supérieure à dix fois la largeur.

De telles particules conductrices sont particulièrement avantageuses pour limiter leur agrégation lors de la consolidation tout en assurant un réseau conducteur modifiable.

De préférence, plus de 90%, plus de 95%, plus de 99%, de préférence sensiblement 100% des particules conductrices, en pourcentage en nombre, sont constituées, pour plus de 90%, plus de 95%, plus de 99%, de préférence sensiblement 100% de leur masse, d'un ou plusieurs constituants choisis dans le groupe constitué des métaux et des métalloïdes conducteurs, de préférence dans le groupe constitué par Ag, Al, Au, Cu, Fe, Ge, Mo, Ni, Pd, Pt, Rh, Si, Ta, Ti, W, le graphite, le graphène, $TiB_2$, TiC, TiN, $ZrB_2$, ZrC, ZrN, $VB_2$, VC, VN, $CrB_2$, CrBN et WC.

Dans un mode de réalisation, plus de 90%, plus de 95%, plus de 99%, de préférence sensiblement 100% des particules conductrices, en pourcentage en nombre, sont des nanotubes de carbone tels que par exemple décrit par WO2004/065926.

Dans un mode de réalisation, plus de 90%, plus de 95%, plus de 99%, de préférence sensiblement 100% des particules conductrices, en pourcentage en nombre, sont particules conductrices décrites dans WO2017/009256.

De préférence, plus de 90%, plus de 95%, plus de 99%, de préférence sensiblement 100% des particules conductrices, en pourcentage en nombre, sont des fibres en un métal réfractaire, de préférence en Platine, par exemple des fibres de Platine (Pt) telles que décrites dans WO2010003389A2.

De préférence, la modification de l'impédance du réseau conducteur ne résulte que de la modification de l'agencement des particules conductrices. En particulier, les particules conductrices sont de préférence en un matériau dont l'impédance n'est pas modifiée sous l'effet d'une contrainte mécanique. De préférence, les particules conductrices ne sont pas en un matériau piézo-électrique.

La résistivité électrique du matériau constituant les particules conductrices est inférieure à 1 mΩ.m, de préférence inférieure à 0,5 mΩ.m, de préférence inférieure à 0,2 mΩ.m, de préférence inférieure à 0,1 mΩ.m, de préférence inférieure à 100 microohm.m (μ.Ω.m), de préférence inférieure à $10^{-6}$ ohm.m à la température de service, de préférence à toute température comprise entre 20°C et 1000°C, de préférence entre 20°C et 1200°C.

*Particules céramiques*

La phase céramique 4 est constituée de particules céramiques.

De préférence, plus de 90%, plus de 95%, de préférence plus de 99%, de préférence 100% en nombre desdites particules céramiques présentent une longueur comprise entre 0,1 et 100 μm. Ces particules sont dites « particules céramiques fines ».

De préférence, plus de 90%, plus de 95%, de préférence plus de 99%, de préférence 100% en nombre desdites particules céramiques présentent une largeur supérieure à 0,5 μm et/ou inférieure à 50 μm, de préférence inférieure à 5 μm. De préférence, plus de 90%, plus de 95%, de préférence plus de 99%, de préférence 100% en nombre desdites particules céramiques présentent une longueur supérieure à 10 μm, de préférence supérieure à 50 μm et/ou inférieure à 500 μm.

La fonction des particules céramiques est d'éviter l'agglomération des particules conductrices et de les protéger de la température et/ou de l'atmosphère éventuellement agressive dans le milieu dans lequel le capteur est utilisé.

Les particules céramiques sont en un matériau céramique isolant électriquement, qui présente une résistivité électrique supérieure à 1 Ohm.m, de préférence supérieure ou égale à $10^3$ Ohm.m , de préférence supérieure à $10^6$ Ohm.m et/ou inférieure à $10^{12}$ Ohm.m, à 20°C, de préférence à toute température comprise entre 20°C et 1000°C, de préférence entre 20°C et 1200°C.

Dans un mode de réalisation, les particules céramiques sont de forme aciculaire, de préférence sont des fibres, de préférence des fibres dont la longueur est supérieure à dix fois l'épaisseur et supérieure à dix fois la largeur. Ce mode de réalisation est particulièrement adapté lorsque des particules conductrices sont déposées dans un substrat fibreux ou poreux.

De préférence, les particules céramiques fines, de préférence toutes les particules céramiques sont constituées, pour plus de 90%, plus de 95%, de préférence plus de 99%, de préférence sensiblement 100%, d'un composé choisi parmi les composés suivants : $Al_2O_3$, $ZrO_2$, $Cr_2O_3$, MgO, CaO, $SiO_2$, : SiC $\alpha$ ou $\beta$, BN, $B_4C$, C, de préférence sous forme diamant, AlN, $Si_3N_4$ et les oxynitrures de Silicium dont les SiAlON. De préférence, en particulier si les particules conductrices sont des particules métalliques ou des nanoparticules carbonées, les particules sont constituées, pour plus de 90%, plus de 95%, de préférence plus de 99%, de préférence sensiblement 100%, d'un composé choisi parmi les composés suivants : SiC $\alpha$ ou $\beta$, BN, B4C, C sous forme diamant, AlN, $Si_3N_4$ et les oxynitrures de Silicium dont les SiAlON.

De préférence, toutes les particules céramiques fines, de préférence toutes les particules céramiques ont sensiblement la même composition.

Dans la phase céramique 4, les particules céramiques sont de préférence liées les unes aux autres par frittage.

De préférence, la phase céramique est constituée, pour plus de 90%, plus de 95%, de préférence plus de 99%, de préférence sensiblement 100%, d'un ou plusieurs composé(s) suivant(s) : $Al_2O_3$, $ZrO_2$, MgO, CaO, $SiO_2$, SiC, BN, et les oxynitrures de Silicium dont les SiAlON, et $Si_3N_4$.

La « masse de mesure » constituée des particules conductrices 6 et de la phase céramique 4 peut constituer à elle-seule un capteur selon l'invention.

Elle peut également être fixée sur un support 8. En particulier, le support 8 peut être une bande ou une nappe, de manière à constituer un patch.

L'ensemble 4-6-8 forme alors un capteur 2 sous la forme d'un patch.

Le support 8 peut par exemple présenter une surface de 0,5 à 1000 $mm^2$, de préférence de 1 à 100 $mm^2$, de préférence supérieure à 10 mm par 10 mm, et/ou une épaisseur inférieure à 1 mm, voire inférieure à 500 micromètres.

Dans un mode de réalisation préféré, le capteur 2 comporte une couche d'interfaçage 9 fixée sur le support, en particulier sur une face du support opposée à la face qui supporte la masse de mesure, et/ou, notamment en l'absence de support, fixée sur la masse de mesure.

La couche d'interfaçage 9 peut être, en particulier si la température de service est inférieure ou égale à 400°C, une colle comportant un polymère thermodurcissable, thermoplastique ou élastomère réticulable. De préférence, lorsque le polymère est thermodurcissable, son taux de réticulation est supérieur à 75%, voire supérieur à 90%. De préférence, lorsque le polymère est thermoplastique, son taux de cristallinité varie de 0% à 80%. De préférence encore, la colle comporte plus de 50% en masse de polymère(s), par exemple polyuréthane ou époxyde. Si la température de service est supérieure ou égale à 400°C, la couche d'interfaçage est de préférence une colle inorganique, par exemple une colle à base de géopolymère, par exemple comprenant du silicate de soude, ou par exemple une colle à base de Platine ou de Cuivre, ou encore par exemple une colle réfractaire décrite dans l'article R. Luhn, E. Zimmermann und G. Kôhler, Jena « Anorganische Hochtemperaturklebstoffe - Anwendungsmöglichkeiten und Grenzen » paru dans « Schweißen und Schneiden 2000 Vorträge der gleichnamigen Großen Schweißtechnischen Tagung in Nürnberg vom 27. bis 29. September 2000 », pages 249 à 252, par exemple une colle céramique Pyro-Putty #653 ou 2400 fournie par Aremco,

L'épaisseur de la couche d'interfaçage 9 est de préférence constante, de préférence supérieure à 0,1 mm et/ou inférieure à 2 mm, de préférence inférieure à 1 mm. La couche d'interfaçage s'étend de préférence de manière à couvrir toute la surface du support destinée à être posée sur la pièce cible.

De préférence, la nature de la couche d'interfaçage 9 est adaptée au comportement de la pièce cible. Avantageusement, un même patch peut ainsi être utilisé pour différentes pièces cibles ou pour différentes applications, en modifiant seulement la couche d'interfaçage 9.

Pour choisir une couche d'interfaçage, on peut coller des dits patchs sur des pièces avec différentes colles, pour constituer des dispositifs de test identiques, puis choisir celle qui permet au capteur de se comporter comme souhaité, par exemple de conserver un comportement élastique jusqu'à des contraintes les plus proches possibles de la contrainte d'endommagement minimale, puis d'adopter un comportement plastique au-delà de la contrainte d'endommagement minimale.

L'homme du métier sait modifier la limite d'élasticité d'une colle. De manière générale, le comportement d'une colle peut être modifié en ajustant sa composition, par exemple en modifiant sa quantité de matériaux organiques (polymères thermodurcissables, thermoplastiques ou élastomères réticulants), d'agents accélérateurs, de retardants ou de fluidifiants. Il est aussi possible de la charger, en particulier avec une charge en élastomère ou constituée de fibres polymères ou minérales.

De préférence, la déformation du capteur 2 est guidée par la déformation de la masse de mesure et/ou par la déformation de la couche d'interfaçage 9. Autrement dit, le capteur se déforme élastiquement ou plastiquement selon que la masse de mesure et/ou la couche d'interfaçage se déforme(nt) élastiquement ou plastiquement, respectivement.

*Dispositif*

Un dispositif selon l'invention du type représenté sur la figure 1 comporte un capteur 2 et une pièce cible 10, sur laquelle est fixé le capteur 2.

La pièce cible 10 peut être en particulier une pièce fragile.

La pièce cible 10 peut être en une céramique et/ou en un verre et/ou en une vitrocéramique et/ou en un composite à phase céramique (CMC), dont la température de fusion est de préférence supérieure à 1 000 °C, voire supérieure à 1 200°C. Dans le cas d'une pièce cible en céramique, la pièce cible peut être en un ou plusieurs des matériaux suivants : alumine, zircone, silice, carbure de silicium ou de bore, et nitrure de silicium.

La pièce cible 10 peut être en un matériau fondu ou fritté. Dans un mode de réalisation, la pièce cible est constituée pour plus de 80%, plus de 90%, voire sensiblement 100% de sa masse, de grains céramiques, de préférence agglomérés par frittage.

La pièce cible 10 peut présenter une masse supérieure à 500 g, de préférence supérieure à 1 kg et/ou inférieure à 100 kg, inférieure à 50 kg, inférieure à 10 kg, voire inférieure à 5 kg.

La pièce cible 10 peut présenter une forme quelconque, déterminée en fonction de l'application visée. La pièce cible 10 peut en particulier présenter la forme d'une brique parallélépipédique rectangle. Elle peut se présenter sous la forme d'un cylindre d'un rouleau ou d'une tige, d'une pièce creuse ou présentant une cavité interne fermée ou ouverte, par exemple d'un creuset, d'un tube ouvert d'un ou de chaque côté, d'un disque ou d'un cylindre plat percé, notamment avec un orifice central. Elle peut en particulier se présenter sous la forme d'une plaque ou d'un disque dont l'épaisseur est supérieure à 5 mm, de préférence supérieure à 10 mm et/ou inférieure à 20 mm.

Dans une utilisation comme revêtement de four en particulier, la pièce cible présente de préférence une longueur supérieure à 20 cm et/ou inférieure à 50 cm, et/ou une largeur supérieure à 10 cm et/ou inférieure à 30 cm, et/ou une épaisseur supérieure 1 cm et/ou inférieure à 5 cm.

Dans une utilisation comme revêtement de protection WRT en particulier, la pièce cible présente de préférence une longueur supérieure à 50 cm et/ou inférieure à 200 cm, une largeur supérieure à 30 cm et/ou inférieure à 50 cm et une épaisseur supérieure 3 mm et/ou inférieure à 10 cm.

Dans une utilisation comme support de cuisson en particulier, la pièce cible présente de préférence une longueur supérieure à 20 cm et/ou inférieure à 200 cm, et/ou une largeur supérieure à 20 cm et/ou inférieure à 70 cm, et/ou une épaisseur supérieure 3, de préférence supérieure à 5 mm et/ou inférieure à 5 cm.

Dans le cas d'un outil abrasif, la pièce cible peut présenter un diamètre supérieur à 20 cm et une largeur supérieure à 1 mm ou plus (disque abrasif), voire supérieure à 10 mm, voire supérieure à 100 mm (meule abrasive).

De préférence, le capteur est disposé de manière à ne pas être soumis directement aux contraintes appliquées sur la pièce cible. Par exemple, si la pièce cible est une plaque de cuisson, le capteur n'est de préférence pas contact direct avec la matière à cuire qui est déposée sur la plaque de cuisson.

Cependant, le capteur doit être disposé de manière subir, au moins indirectement, des contraintes appliquées sur la pièce cible. Une disposition sur les parties les plus vulnérables de la pièce cible, par exemple les coins et les arêtes, peut être satisfaisante.

Le capteur peut être disposé en surface et/ou dans la masse de la pièce cible.

La surface de la pièce cible sur laquelle le capteur 2 est fixé peut être une surface quelconque de la pièce cible 10. De préférence, cette surface est une surface qui, en service, est susceptible de subir des contraintes mécaniques ou thermomécaniques capables de dégrader la pièce cible. En particulier, ces contraintes peuvent résulter de températures élevées, de variations de températures ou de chocs mécaniques.

La forme de la surface sur laquelle le capteur est fixé n'est pas limitative. Elle peut être lisse ou rugueuse, présenter des trous traversants ou être continue, optionnellement présenter des cavités ou des bossages, être développable ou non, être plate ou non.

Dans un mode de réalisation, les particules céramiques et/ou les particules conductrices formant le réseau conducteur sont distribuées dans la pièce cible, de préférence sous la forme d'une ou plusieurs couches céramiques, en surface et/ou au sein de la pièce cible, de préférence dans une phase liante liant des grains de la pièce cible ou en surface de pores ouverts de la pièce cible.

De préférence, la pièce cible est choisie parmi :

- une pièce d'un échangeur thermique, en particulier une tuile réfractaire, en particulier une tuile de revêtement de chaudière et/ou une coquille de protection de tube de réchauffeur d'un incinérateur, une pièce céramique d'un absorbeur solaire

- un support de cuisson, en particulier pour la cuisson d'objets céramiques, en anglais *« kiln furniture »,*

- une tuile ou une pièce de protection d'une chambre de turbine de combustion , en particulier d'une chambre de turbine à gaz,

- un bloc réfractaire de four, en particulier d'un four métallurgique ou d'un four de fusion de verre, en particulier un bloc de mur, un bloc de sole ou une pièce de voûte,

- une pièce de protection contre l'abrasion, dite « anti abrasion », en particulier pour un convoyeur, notamment un convoyeur destiné au transport de minerais (en anglais *« Wear Resistant Technology »,* WRT),

- un abrasif, en particulier un abrasif aggloméré comportant des particules céramiques dans une matrice liante, en particulier une meule ou un disque abrasif destinés en particulier à la rectification ou au traitement de surface comprenant l'affutage, le polissage, l'ébavurage

- un outil de coupe en céramique,

- un élément de pompe ou de circuit hydraulique en céramique,

- un supports ou un tube isolants électrique en céramique

- un carreau céramique ou une pièce céramique ou vitrocéramique de parement,
- une plaque, un tube comprenant un matériau vitrocéramique,
- une plaquette ou un disque de frein ou un objet en céramique d'un dispositif de freinage,
- un vitrage, et en particulier une plaque de verre ou un parebrise,
- un filtre pour la filtration liquide ou gazeuse,
- un radôme ou une pièce protégeant une antenne de radio ou de radar.

*Kit*

Un kit selon l'invention comporte un dispositif selon l'invention et un appareil de mesure 16 adapté pour mesurer ladite propriété électrique, en particulier à l'étape 3).

L'appareil de mesure 16 peut être connecté au réseau conducteur 7 au moyen de câbles, par exemple le connectant aux bornes de connexion 18 (figure 1). De préférence, les câbles et les bornes de connexion sont en un métal réfractaire résistant à plus de 400°C, par exemple en Platine. Une colle réfractaire et conductrice à base de platine peut être utilisée pour améliorer les contacts électriques.

Dans un mode de réalisation préféré, l'appareil de mesure 16 n'est pas connecté au réseau conducteur 7. Ce dernier forme cependant une boucle permettant une mesure sans contact, par induction.

L'appareil de mesure 16 est connecté à un appareil d'analyse 22, c'est-à-dire un appareil comportant classiquement un processeur, une mémoire informatique et un logiciel configurés pour déterminer, à partir de la propriété électrique mesurée, un état de la pièce.

L'appareil de mesure 16 peut être alternativement physiquement intégré dans l'appareil d'analyse.

Tout appareil de mesure et d'analyse conventionnel peut être utilisé. Notamment, le traitement, l'analyse et l'enregistrement de la propriété électrique mesurée et de ses variations peuvent mettre en oeuvre des moyens d'amplification, de filtrage, de multiplexage et de numérisation connus de l'homme du métier dans le domaine des capteurs résistifs, notamment des capteurs composites résistifs.

La communication entre le capteur et l'appareil de mesure et/ou entre l'appareil de mesure et l'appareil d'analyse peut être réalisée de façon filaire ou sans fil, par exemple par wifi ou Bluetooth®.

De préférence, l'appareil de mesure est programmé pour enregistrer l'impédance du capteur à intervalle de temps régulier.

*Procédés de fabrication du capteur, du dispositif et du kit*

Dans un mode de réalisation, un capteur selon l'invention, destiné à constituer, avec une pièce cible, un dispositif selon l'invention, est fabriqué suivant un procédé comportant les étapes a) à d).

**A l'étape a),** on prépare une charge de départ.

La charge de départ peut prendre la forme (a1) d'une barbotine comportant :

- des particules céramiques, et/ou des précurseurs de particules céramiques,
- des particules conductrices électriquement et/ou des précurseurs de particules conductrices électriquement, et
- un solvant.

Les quantités de particules céramiques et/ou précurseurs de particules céramiques et de particules conductrices et/ou de précurseurs de particules conductrices dans la barbotine sont déterminées de manière que la barbotine conduise, après l'étape c), à une microstructure constituée de particules conductrices dispersées dans une phase céramique.

De préférence, plus de 90%, de préférence plus de 95%, de préférence 100% des particules dispersés dans le solvant, en pourcentage en nombre, sont des particules céramiques et/ou des précurseurs de particules céramiques, et/ou des particules conductrices et/ou des précurseurs de particules conductrices.

Les caractéristiques relatives aux particules céramiques et/ou aux précurseurs de particules céramiques, et/ou aux particules conductrices et/ou aux précurseurs de particules conductrices décrites ci-dessous sont, sauf indications contraires ou incompatibilité technique, applicables pour les différentes formes de la charge de départ.

Les particules conductrices peuvent être des particules composites comprenant un noyau central non conducteur et un revêtement conducteur électriquement, déposé sur ce noyau central. Le noyau central peut être en particulier une fibre, de préférence en un matériau céramique, notamment en un matériau cristallisé, une vitrocéramique ou un verre. Le noyau central peut être en particulier une fibre de silice obtenue par fusion de quartz.

La fibre peut par exemple présenter un diamètre ou une épaisseur inférieure à 20 000 nanomètres, de préférence inférieure à 18 000 nanomètres, de préférence inférieure ou égale à 16 000 nanomètres, de préférence inférieure à 15 000 nanomètres, de préférence inférieure à 14 000 nanomètres, voire inférieure à 12 000 nanomètres, ou inférieure à 10 000 nanomètres.

Dans un mode de réalisation, on dépose sur le noyau central un précurseur d'un métal, par exemple un sel métallique inorganique ou un composé organométallique, ou on utilise une voie sol-gel à partir d'un alcoolate, puis on procède à une réduction vers l'état élémentaire du métal, par exemple par traitement thermique ou réaction chimique avec un agent réducteur.

Le précurseur de métal peut être en particulier choisi parmi les composés organométalliques, le Diméthyl[tris(diméthylamino)titanio]amine, un borohydrure de Zirconium, un polymère de tungstène appelé bis(tert-butylimido)bis(diméthylamido)tungsten, un polymère dinitrile de formule (— $B_{10}H_{12}N=C-(CH_2)_aC=N-$) où a est compris entre 5 et 8, un polymère de formule générale (— $B_{10}H_{12}N=C(CH_2)_5C=N-$) auquel est ajouté une poudre fine, par exemple submicronique, de $MO_2$ où M est Ti ou Zr afin d'obtenir après l'étape c) un nitrure de Bore et de Zirconium ou de Titane, ou du borazine ($B_3N_3H_6$).

De préférence, le métal est choisi dans le groupe formé par Ag, Al, Au, Cu, Fe, Ge, Mo, Ni, Pd, Pt, Rh, Si, Ta, Ti, W et leurs alliages.

De préférence, on dépose un sel organique soluble dans l'eau et qui se dissocie pour former un cation libre. Le dépôt peut être notamment par pulvérisation, par trempage, par imprégnation ou en phase gazeuse.

Il est aussi possible de déposer des nanoparticules conductrices sur le noyau central, par exemple par chimisorption après silanisation du noyau central, par physisorption ou par attraction électrostatique.

La charge de départ peut prendre la forme (a2) d'une barbotine « céramique » comportant des particules céramiques et/ou des précurseurs de particules céramiques et un premier solvant, et une barbotine « conductrice » comportant des particules conductrices électriquement et un deuxième solvant, de préférence identique au premier solvant.

De préférence, plus de 90%, de préférence plus de 95%, de préférence 100% des particules dispersés dans le premier solvant, en pourcentage en nombre, sont des particules céramiques et/ou de précurseurs de particules céramiques.

De préférence, plus de 90%, de préférence plus de 95%, de préférence 100% des particules dispersées dans le deuxième solvant, en pourcentage en nombre, sont des particules conductrices et/ou de précurseurs de particules conductrices.

Pour les formes (a1) et (a2), les quantités de particules et précurseurs et leurs natures sont choisies pour obtenir, à l'issue de l'étape c) ou de l'étape d), un capteur selon l'invention. Ce choix ne pose pas de difficulté particulière pour l'homme de l'art.

Les précurseurs de particules céramiques peuvent être en particulier choisis parmi les polymères précéramiques qui lors d'un traitement thermique se décomposent en particules céramiques, par exemple être un Polysiloxane, un polysilaxane, un polycarboxylane, un TetraEthylOrthoSilicate, un polymère à base de silicone, ou un polymère à base de Polyvinylpyrolidone.

Les précurseurs de particules conductrices peuvent être en particulier choisi parmi les composés organométalliques ou les précurseurs de particules céramiques conductrices choisis par exemple parmi le Diméthyl[tris(diméthylamino)titanio]amine, un borohydrure de Zirconium, un polymère de tungstène appelé bis(tert-butylimido)bis(diméthylamido)tungsten, un polymère dinitrile de formule (— $B_{10}H_{12}N=C-(CH_2)_aC=N-$) où a est compris entre 5 et 8, un polymère de formule générale (— $B_{10}H_{12}N=C(CH_2)_5C=N-$) auquel est ajouté une poudre fine, par exemple submicronique, de $MO_2$ où M est Ti ou Zr afin d'obtenir après l'étape c) un nitrure de Bore et de Zirconium ou Titane, ou du borazine ($B_3N_3H_6$).

La quantité de particules conductrices est de préférence comprise entre 0,1 et 30%, de préférence entre 0,1% à 10% en volume, sur la base du volume de la barbotine.

Le solvant peut être aqueux ou non aqueux. Il est de préférence organique, en particulier pour disperser des particules métalliques. De préférence le solvant est de l'isopropanol.

Notamment dans le cas particulier de particules conductrices céramiques, le solvant peut être de l'acide carboxylique, par exemple de l'acide oléique, un acide propionique ou un acide coprylique, de l'eau avec un tetraéthyle d'ammonium, un PolylminoEthylene (PEI), du 2-butanone/ethanol ou du $C_{57}H_{105}O_{12}P$ ou « Castor oil phosphate ».

Le taux de matières sèches dans une barbotine est de préférence supérieur à 20%, de préférence supérieur à 30%, de préférence supérieur à 50%.

Le mélange de particules dans un solvant peut être effectué par tout moyen, de préférence avec un agitateur mécanique, une agitateur mécanique assisté d'ultrasons, un ultra turrax®, ou par résonance acoustique.

Optionnellement, la dispersion des particules peut être contrôlée par ultrasons et/ou par résonance acoustique.

La charge de départ peut aussi comporter, optionnellement :

- un dispersant, par exemple un lipopeptide ou du phosphate ester, de préférence entre 0,01% et 5% en masse sur la base de la charge de départ, et/ou
- un liant, par exemple un copolymère d'anhydride maléique-isobutylène, du PVB (PolyVivylButyral), un copolymère soluble d'isobutylene et d'anhydride maléique, un PEG (PolyEthyleneGlycol) à haut poids moléculaire, c'est-à-dire supérieur à 800 g/mol, voire à 1000 g/mol, de préférence entre 0,01% et 5% en masse sur la base de la charge de départ, et/ou
- un plastifiant, de préférence choisi parmi les phtalates, en particulier du BBP (ButylBenzylPhtalate), de préférence entre 0,01% et 5% en masse sur la base de la charge de départ.

La charge de départ peut prendre la forme (a3) d'une poudre comportant un mélange de particules céramiques et/ou précurseurs de particules céramiques, et des particules conductrices.

De préférence, plus de 90%, de préférence plus de 95%, de préférence 100% des particules de la poudre, en pourcentage en nombre, sont des particules céramiques et/ou des précurseurs de particules céramiques, et/ou des particules conductrices et/ou des précurseurs de particules conductrices.

La charge de départ peut prendre la forme (a4) d'au moins deux poudres différentes, une première poudre comportant, de préférence étant constituée de particules céramiques et/ou de précurseurs de particules céramiques, une deuxième poudre comportant, de préférence étant constituée de particules conductrices.

De préférence, plus de 90%, de préférence plus de 95%, de préférence 100% des particules de la première poudre, en pourcentage en nombre, sont des particules céramiques et/ou de précurseurs de particules céramiques.

De préférence, plus de 90%, de préférence plus de 95%, de préférence 100% des particules de la deuxième poudre, en pourcentage en nombre, sont des particules conductrices et/ou de précurseurs de particules conductrices.

Lorsque l'étape b) comporte le dépôt de plusieurs couches superposées, la charge de départ peut être une première poudre constituée de particules céramiques et/ou de précurseurs de particules céramiques pour constituer certaines couches, dites « couches céramiques », et une deuxième poudre constituée de particules conductrices pour constituer d'autres couches, dites « couches conductrices ».

Dans un mode de réalisation, le substrat sur lequel la charge de départ est déposée ou intégrée à l'étape b) constitue la phase céramique ou est un précurseur de la phase céramique, c'est-à-dire qu'il se transforme en la phase céramique à l'étape c), de préférence par frittage. Il n'est alors pas nécessaire que la charge de départ apporte des particules céramiques ou des précurseurs de particules céramiques.

La charge de départ peut ainsi prendre la forme (a5) d'une barbotine « conductrice » comportant des particules conductrices, de préférence métalliques, et/ou des précurseurs de particules conductrices ou la forme (a6) d'une poudre « conductrice » comportant des particules conductrices et/ou des précurseurs de particules conductrices. De préférence, plus de 90%, de préférence plus de 95%, de préférence 100% des particules de la barbotine conductrice ou de la poudre conductrice, en pourcentage en nombre, sont des particules conductrices et/ou des précurseurs de particules conductrices.

Dans un mode de réalisation, la charge de départ prend la forme (a7) d'une barbotine « fonctionnalisée » ou la forme (a8) d'une poudre « fonctionnalisée » comportant des particules céramiques et/ou de précurseurs de particules céramiques sur lesquelles sont fixées des particules conductrices et/ou des précurseurs de particules conductrices.

Les particules céramiques peuvent être en particulier des plaquettes, par exemple en alumine, en alpha-SiC ou en AlN.

De préférence, plus de 90%, de préférence plus de 95%, de préférence plus de 98%, de préférence plus de 99%, en volume, des plaquettes présentent une longueur inférieure à 150 $\mu$m, de préférence inférieure à 100 $\mu$m, et/ou de préférence supérieure à 5 $\mu$m, de préférence supérieure à 10 $\mu$m.

De préférence, plus de 90%, de préférence plus de 95%, de préférence plus de 98%, de préférence plus de 99%, en volume, des plaquettes présentent un rapport d'aspect (rapport de la longueur sur l'épaisseur de la plaquette) inférieur à 70, de préférence inférieur à 50, et/ou de préférence supérieur à 10, de préférence supérieur à 15, de préférence supérieur à 20.

Les formes (a7) et (a8) permettent avantageusement de fabriquer une pièce cible dans laquelle le capteur est intégré, par exemple comme décrit dans PCT/IB2013/060700.

Les particules conductrices peuvent être en particulier en un métal choisi parmi Ag, Cu, Pt et Fe.

**A l'étape b),** la charge de départ est mise sous la forme d'une préforme.

Une première variante (b1) consiste à déposer la charge de départ sur un substrat.

Le substrat peut être :

- la pièce cible à laquelle le capteur est destiné, ou
- une pièce crue qui, lors de l'étape c), est transformée en la pièce cible à laquelle le capteur est destiné, ou
- un substrat indépendant de la pièce cible, qui peut être provisoire lorsqu'il est séparé de la masse de mesure avant utilisation du capteur, ou définitif dans la situation inverse.

Lorsque le substrat est la pièce cible ou une pièce crue de la pièce cible, et qu'il est poreux ou fibreux, par exemple lorsque le substrat est un feutre ou un textile tissé, tricoté, ou tressé, il est préférable de former le capteur en déposant une ou plusieurs couches directement sur la pièce cible ou la pièce crue de la pièce cible, ou dans la porosité de la pièce cible ou la pièce crue de la pièce cible.

Si le substrat est une pièce crue de la pièce cible, la température de frittage de la pièce crue est de préférence inférieure à la température de consolidation de la préforme.

Dans un mode de réalisation préféré, le substrat présente la forme d'un fil ou d'un textile. Après dépôt de la charge de départ sur le substrat, un traitement est de préférence appliqué pour fixer les particules conductrices et/ou les précurseurs de particules conductrices contenues dans la charge de départ, classiquement par séchage. On obtient ainsi un fil ou un textile selon l'invention.

Des fils fonctionnalisés peuvent être ensuite agencés sou la forme d'un textile, sans orientation préférentielle, par exemple pour constituer un feutre, ou selon au moins une orientation préférentielle, par exemple par tissage, tricotage, tressage ou couture, pour constituer tout ou partie de la pièce cible ou d'une pièce crue de la pièce cible. Dans un mode de réalisation les fils fonctionnalisés représente plus de 5%, plus de 10% et/ou moins de 90%, moins de 80% de la masse du textile. Dans un textile tissé ou tricoté, des fils fonctionnalisés sont de préférence distribués de manière homogène.

Le substrat est de préférence la pièce cible. Avantageusement, la fabrication de cette dernière, et en particulier l'opération de frittage de la pièce crue éventuelle, ne risque pas d'endommager le capteur.

La pièce cible est de préférence un corps poreux présentant une porosité ouverte supérieure à 1%, à 3%, à 5% ou à 10%, de préférence une porosité ouverte orientée suivant un plan ou une direction préférentielle. La précision du capteur est avantageusement améliorée suivant une ou plusieurs directions de déformation.

De préférence, les dimensions et/ou l'orientation des pores sont déterminées en fonction du comportement en déformation souhaité pour le capteur.

Dans un mode de réalisation préféré, la pièce cible est un produit, de préférence fritté, comportant une pluralité de pores tubulaires tronconiques, de préférence macroscopiques, de préférence orientés selon une direction préférentielle.

De préférence, la pièce cible est conforme à l'enseignement de PCT/IB2013/060700.

Dans un mode de réalisation, le substrat est un substrat flexible à la main, par exemple du type Flexiramics fabriqué par la société Eurekite, ou un tissu Nextel.

La charge de départ est de préférence déposée sur le substrat sous une forme quelconque, pourvue qu'elle soit adaptée à l'application visée.

En particulier, avec une charge de départ sous la forme (a1), la charge de départ mise en forme peut être massive. Elle peut présenter une épaisseur supérieure à 1 mm, à 5 mm ou à 10 mm et/ou inférieure à 20 mm.

Quelle que soit la forme de la charge de départ (a1), (a2), (a3) ou (a4), la charge de départ est de préférence déposée sur le substrat sous la forme d'une, de deux ou de plus de deux couches. Les couches successives peuvent être identiques ou différentes.

En particulier, avec une charge de départ sous la forme (a2) ou (a4), des couches de natures différentes peuvent être fabriquées. De préférence, une couche céramique, c'est-à-dire une couche qui comporte des particules céramiques et/ou des précurseurs de particules céramiques mais pas de particules conductrices ni de précurseurs de particules conductrices, succède à une couche conductrice, c'est-à-dire une couche qui comporte des particules conductrices mais pas de particules céramiques ni de précurseurs de particules céramiques, et/ou une couche conductrice succède à une couche céramique.

Toutes les techniques de dépôt adaptées à la forme de la charge de départ sont possibles.

Lorsque la pièce cible est poreuse, la ou les couches peuvent être déposées par imprégnation de la pièce cible.

Le dépôt d'une couche peut être réalisé par coulage en bande ou par pulvérisation, de préférence par coulage en bande. L'épaisseur de la couche est de préférence comprise entre 0,05 mm et 3 mm, de préférence entre 0,1 mm et 1 mm.

Optionnellement, on applique un champ électrique ou magnétique pour orienter et/ou disperser les particules conductrices. Avantageusement, la propriété électrique peut être ainsi différente selon la contrainte subie par le capteur.

Un coulage en bande (ou « tape casting » en anglais) est particulièrement approprié, de préférence en mettant en oeuvre des techniques d'électrophorèse ou de chimiphorèse pour contrôler la structure et l'orientation des particules conductrices pendant la mise en forme. Une pulvérisation de la charge de départ, de préférence à température ambiante, typiquement d'environ 20°C, est aussi efficace.

La deuxième variante (b2) consiste à incorporer la charge de départ dans la masse du substrat. De préférence, la charge de départ est incorporée au sein de la pièce crue de la pièce cible ou au sein de la pièce cible. L'étape c) conduit alors directement à un dispositif selon l'invention.

Dans un mode de réalisation préféré, des particules conductrices, de préférence sous la forme de fibres (ou un précurseur desdites particules conductrices), sont introduites dans un fil comportant également des particules non conductrices, de préférence sous la forme de fibres. On obtient ainsi un fil fonctionnalisé.

Des fils fonctionnalisés peuvent être ensuite agencés sou la forme d'un textile, sans orientation préférentielle, par exemple pour constituer un feutre, ou selon au moins une orientation préférentielle, par exemple par tissage, tricotage, tressage ou couture, pour constituer tout ou partie de la pièce cible ou d'une pièce crue de la pièce cible. Dans un mode de réalisation les fils fonctionnalisés représente plus de 5%, plus de 10% et/ou moins de 90%, moins de 80% de la masse du textile. Dans un textile tissé ou tricoté, des fils fonctionnalisés sont de préférence distribués de manière homogène.

Dans la troisième variante (b3), la charge de départ est mise en forme de manière à constituer une pièce crue de la pièce cible. Autrement dit, le dispositif selon l'invention se confond avec le capteur selon l'invention, la pièce cible constituant le capteur.

La charge de départ peut être en particulier configurée pour la fabrication d'un corps poreux, par exemple tel que celui décrit dans PCT/IB2013/060700. Elle peut comporter de la silice colloïdale pour faciliter le frittage éventuel.

La charge de départ peut être en particulier sous la forme (a1), (a3), (a7) ou (a8).

De préférence, les particules conductrices allongées et/ou les particules céramiques fines sont orientées suivant une direction ou un plan préférentiel, de préférence une direction préférentielle. L'orientation de particules peut être par exemple modifiée magnétiquement ou par un procédé de freeze casting, comme décrit par exemple dans PCT/IB2013/060700. La forme anisotrope (non sphérique) d'une particule, par exemple une forme de plaquette ou de bâtonnet ou de grain de riz, ou une forme multi-facettée, peut favoriser son orientation préférentielle. Un simple essai permet de vérifier si une particule est orientable.

Quel que soit le mode de réalisation (b1), (b2) ou (b3), si la charge de départ après mise en forme comporte une phase liquide, elle est ensuite séchée, de préférence à une température inférieure à 100°C, de préférence inférieure à 80°C, de préférence pendant une durée supérieure à 2 heures, de préférence supérieure à 4 heures.

Pour fabriquer une masse de mesure multicouches, chaque couche déposée peut être séchée avant dépôt de la couche suivante.

Le séchage conduit à une préforme.

**A l'étape c),** la préforme obtenue à l'étape b) est consolidée par traitement thermique.

Optionnellement, avant traitement thermique, la préforme peut subir un traitement pour transformer les précurseurs de particules céramiques et/ou les précurseurs de particules conductrices en particules céramiques et en particules conductrices, respectivement. Par exemple, un traitement réducteur de précurseurs de particules conductrices, par exemple déposées sous forme de sels ou de gels, peut être appliqué pour transformer ces précurseurs en nanoparticules métalliques conductrices , de préférence par :

- voie thermique, sous atmosphère contrôlée inerte ou réductrice, à une température inférieure à 1500°C ;
- voie chimique.

Par exemple, après un dépôt dit « electroless » d'un mélange d'ions métalliques et d'un réducteur chimique, les ions métalliques pouvant être réduits chimiquement à moins de 100°C, comme décrit par exemple dans US5681617A.

Dans une variante du mode de réalisation (b1), la charge de départ est déposée sur un substrat qui est destiné à être consolidé. Dans une variante du mode de réalisation (b2), la charge de départ est incorporée dans la masse d'un substrat qui est destiné à être consolidé.

Lorsque le substrat est destiné à être consolidé, le traitement thermique est de préférence adapté pour consolider simultanément la préforme et le substrat. Ce mode de réalisation est particulièrement avantageux lorsque le substrat est une pièce crue destinée à être frittée pour constituer la pièce cible, et en particulier lorsque la différence entre la température de frittage de la pièce crue et la température de frittage de la préforme est inférieure à 50°C.

Pour fabriquer une phase céramique multicouche, la consolidation peut être réalisée après chaque dépôt d'une couche ou pour l'ensemble des couches simultanément.

La consolidation est de préférence réalisée, de manière classique, sous atmosphère contrôlée oxydante, neutre ou réductrice, en fonction de la phase céramique souhaitée, de préférence sous atmosphère non oxydante si les particules céramiques sont en un matériau non oxyde.

La consolidation peut être un frittage.

Le frittage peut être réalisé sous air, en particulier si la préforme est en un matériau à porosité orientée de type oxyde. Le frittage peut être réalisé sous atmosphère non oxydante, en particulier si la préforme est en un matériau non oxyde.

Le frittage peut être réalisé de préférence sans pression, en particulier si la préforme est en un matériau à porosité orientée.

Le frittage peut être réalisé sous pression, de préférence par SPS (*« Spark Plasma Sintering »* en anglais).

De préférence le SPS est réalisé :

- à une température maximale comprise entre 1300°C et 1700°C, de préférence entre 1450°C et 1550°C, et/ou
- à une pression supérieure à 30 MPa, de préférence supérieure à 40 MPa.

Le frittage peut être également réalisé en utilisant un procédé de pressage à chaud (« Hot pressing » en anglais).

Le frittage peut être réalisé à une température inférieure à 1600°C, inférieure à 1500°C, inférieure à 1400°C, inférieure à 1 200°C, voire inférieure à 1000°C.

La durée de frittage est de préférence inférieure à une heure, ce qui limite la migration et l'agglomération des particules conductrices, et ainsi améliore la sensibilité du capteur.

Le frittage peut être un frittage hydrothermal ou solvothermal, du type introduit en 1972 par D.M. Roy et al.

De préférence, en particulier si la charge est sous forme d'une barbotine (a1) ou (a2) comprenant des particules céramiques, la consolidation thermique par frittage est réalisée sous atmosphère contrôlée inerte ou réductrice, à une température inférieure à 1600°C, de préférence inférieure à 1500°C, de préférence inférieure à 1400°C, avec un palier à la température de frittage d'une durée inférieure à 4 heures, de préférence inférieure à 2 heures, voire inférieure à une heure.

La cuisson peut être par exemple une densification rHLPD (*« reactive Hydrothermal Liquid Phase densification »*, en anglais), développée par Riman de l'Université de Rutgers ou CSP (*« coldsintering process »* en anglais), développée à l'Université d'Etat de Pennsylvanie dans le groupe du Professeur Clive A. Randall.

L'étape c) conduit à une masse de mesure comprenant un réseau conducteur de particules conductrices et une phase céramique, de préférence isolante électriquement, de préférence recouvrant ou enrobant le réseau conducteur.

**A l'étape d),** la masse de mesure issue de la consolidation de la préforme peut être fixée sur un support.

Cette étape est optionnelle. En particulier, dans des modes de réalisation, le substrat peut servir de support.

Dans le mode de réalisation où la masse de mesure n'est pas intégrée dans la pièce cible ou dans une pièce crue de la pièce cible, l'étape c) ne conduit pas à un dispositif selon l'invention, mais à un capteur indépendant de la pièce cible. Le support peut faciliter la manipulation du capteur, mais aussi servir à modifier son comportement en déformation, en particulier pour qu'il soit adapté aux déformations de la pièce cible.

Dans le mode de réalisation (b2) où, à l'étape b), la charge de départ est mise sous la forme de la pièce cible (troisième mode de réalisation principal), l'étape c) conduit à la fabrication du capteur et de la pièce cible, qui se confondent. Aucun support n'est donc requis.

Si le substrat est provisoire, il peut être séparé de la préforme après le séchage ou séparé de la masse de mesure après la consolidation.

Une couche d'interfaçage 9 peut être ajoutée au capteur, de manière à être interposée entre la pièce cible et les autres éléments du capteur. En particulier, elle peut être interposée entre le support 8 et la pièce cible 10, ou, en l'absence de support, entre la masse de mesure et la pièce cible 10.

Pour fabriquer un dispositif selon l'invention, on procède, après l'étape c) ou, le cas échéant après l'étape d), **à l'étape e)** suivante :

e) fixation du capteur sur la pièce cible 10, de manière à constituer un dispositif selon l'invention, par exemple du type représenté sur la figure 2.

La couche d'interfaçage 9 peut être une colle permettant cette fixation.

De préférence, cette colle est séchée avant utilisation de la pièce cible. Elle est de préférence soumise à une cuisson afin d'être consolidée, de préférence à une température inférieure à la température de consolidation de la masse de mesure à l'étape c).

L'étape e) est particulièrement bien adaptée lorsque la pièce cible est un tissu ou une pièce présentant une texture poreuse ou fibreuse, par exemple un tissu de fibres de verre et/ou de fibres en un matériau inorganique non métallique et au moins partiellement cristallisé.

*Utilisation*

L'utilisation du capteur et du dispositif découle directement de la description qui précède.

**À l'étape 1)**, on fabrique un dispositif selon l'invention, par exemple en fixant un capteur 2 sur une pièce cible 10 comme représenté sur la figure 1.

**A l'étape 2)**, le dispositif est calibré, c'est-à-dire qu'on détermine une courbe de calibration 24 ou 24' fournissant, pour chaque réponse M possible du capteur 2, une information sur l'état physique de la pièce, et en particulier sur l'endommagement E, et de préférence une information sur l'amplitude de l'endommagement.

La détermination de la courbe de calibration (ou « calibration ») est de préférence effectuée à un instant de référence antérieur à la première mise en service du dispositif selon l'invention.

Les mesures des réponses M sont de préférence effectuées à une température sensiblement égale à la température de service à laquelle la pièce cible est destinée à être utilisée.

De préférence, la calibration est réalisée sur des dispositifs de test identiques au dispositif selon l'invention et qui, chacun, subissent une contrainte particulière. On observe alors l'endommagement éventuel de la pièce. De préférence, on mesure l'endommagement éventuel, de préférence sans contact, de préférence au moyen de rayons X, d'ultrasons ou d'un procédé par résonnance.

En appliquant des contraintes d'intensité croissante, on peut ainsi détecter la contrainte d'endommagement minimale au-delà de laquelle toute contrainte conduit à une microfissuration de la pièce, ainsi que la réponse correspondante du capteur.

L'augmentation de l'endommagement, par exemple la multiplication des microfissures, conduit à une déformation croissante du capteur, et donc conduit à faire évoluer la réponse M en conséquence. Dans la région de la courbe de calibration correspondant à une déformation plastique du capteur, il est donc avantageusement possible d'établir une relation entre une réponse M, c'est-à-dire une mesure de ladite propriété électrique du réseau conducteur 7, et l'amplitude de l'endommagement.

La fatigue de la pièce cible conduit à la fatigue du réseau conducteur qui peut se mesurer par l'évolution de la propriété électrique mesurée. La courbe de calibration permet ainsi d'établir une relation entre une réponse M et l'amplitude de la fatigue, même en l'absence de déformation perceptible de la pièce cible ou du capteur.

**A l'étape 3),** on interroge, à l'instant actualisé et avec l'appareil de mesure 16, le capteur 2, pour mesurer ladite propriété électrique et on en déduit une information sur l'état de la pièce cible.

L'intervalle temporel entre l'instant de calibration et l'instant actualisé peut être par exemple supérieur à une semaine, deux semaines, un mois, deux mois et/ou inférieur à un an, ou six mois.

Si ladite propriété électrique est une résistance électrique du réseau conducteur, on connecte classiquement les deux câbles de l'appareil de mesure 16, classiquement un ohmmètre, aux bornes de connexion 18 (figure 1).

La connexion de l'appareil de mesure aux bornes de connexion peut être désactivable, ce qui est notamment utile lorsque le contrôle de la pièce cible est effectué de manière ponctuelle. Elle peut être non désactivable, c'est-à-dire permanente, en particulier lorsque que le contrôle est sensiblement continu.

Dans un mode de réalisation préféré, la mesure de ladite propriété électrique est effectuée sans contact avec le capteur. En particulier, la propriété électrique peut être une inductance, qui peut être classiquement mesurée à distance.

La réponse M fournie par le capteur peut dépendre de son niveau de déformation ou de son état de fatigue.

A la différence des jauges de contraintes notamment, la forme et la longueur des particules conductrices du capteur selon l'invention permettent de détecter des très faibles déformations de tension et de compression qui apparaissent sur la pièce cible lors de la phase d'endommagement, ainsi que de mesurer l'état de fatigue. La phase céramique, qui protège le réseau conducteur, permet en outre au capteur de fonctionner à haute température, de préférence sans dispositif additionnel de refroidissement.

La réponse M du capteur, c'est-à-dire la propriété électrique mesurée, est ensuite analysée par l'appareil d'analyse 22, connecté à l'appareil de mesure 16, de préférence afin de fournir une information sur l'endommagement éventuel de la pièce. Plus précisément, l'appareil d'analyse utilise la courbe de calibration 24 ou 24' pour déterminer une information sur l'endommagement E de la pièce cible.

Dans un mode de réalisation, l'état de la pièce cible est considéré comme différent selon que la valeur mesurée est supérieure ou inférieure à une valeur de seuil qui correspond à une contrainte prédéterminée pour la pièce cible, ou « contrainte de seuil ». Par exemple, la valeur de seuil peut être déterminée de manière qu'au-delà de la valeur de seuil, le risque de rupture existe ou un endommagement devient inacceptable. Dans ce cas, l'état de la pièce cible est considéré comme « insatisfaisant ». Sinon, il est considéré comme « satisfaisant ».

La valeur de seuil dépend de la pièce cible, notamment de sa géométrie et du matériau qui la constitue, mais aussi des applications et des conditions d'utilisation envisagées. La contrainte de seuil peut être déterminée en réalisant un montage test constitué d'une pièce cible avec un capteur et en mesurant l'effet de différentes contraintes appliquées sur la pièce cible dans des conditions d'utilisation similaires, notamment en température, à celles dans l'application visée. Il est ainsi possible de connaître la valeur de seuil correspondant à la contrainte de seuil.

Dans un mode de réalisation où le capteur est utilisé comme « capteur de déformation », la valeur de seuil peut être la mesure pour laquelle la contrainte appliquée sur la pièce cible conduit à un début de fissuration ou conduit à un endommagement tel que son utilisation devient dangereuse ou risquée. La contrainte de seuil peut être en particulier la contrainte appliquée à la pièce cible au-delà de laquelle la déformation de la pièce cible n'est plus élastique et devient plastique.

La valeur de seuil, c'est-à-dire la propriété électrique mesurée lorsque la contrainte de seuil est appliquée, est de préférence supérieure à 100 fois, voire 1000 fois la propriété électrique mesurée sans l'application de contrainte, à la même température.

Lorsque la propriété électrique mesurée dépasse la valeur de seuil, la courbe de calibration permet avantageusement d'évaluer le niveau d'endommagement. L'état de la pièce peut être par exemple qualifié de « faiblement fissuré », « moyennement fissuré » ou « fortement fissuré », selon la valeur de la propriété électrique mesurée.

En fonction de l'état de la pièce cible ainsi déterminé, il est possible d'identifier le type de défaut dans la pièce cible et/ou de décider si la pièce cible reste utilisable ou si elle doit être remplacée et/ou de planifier des opérations de maintenance.

Dans un mode de réalisation où le capteur est utilisé comme « capteur de fatigue », la valeur de seuil peut être également la propriété électrique au-delà de laquelle l'utilisation de la pièce cible devient dangereuse ou risquée. Dans ce mode de réalisation, la courbe de calibration 24' peut être également utilisée pour fournir une évaluation à tout instant de l'état de fatigue de la pièce cible.

Dans un mode de réalisation, les états physiques déterminés selon l'invention sont traités statistiquement, par exemple au moyen d'algorithmes d'intelligence artificielle, de manière à améliorer la prise de décision.

**Exemples d'applications non limitatifs**

*Détection de microfissures*

La figure 4 illustre la déformation $\varepsilon$ de la pièce cible (trait plein) et du réseau conducteur du capteur (trait pointillés) d'un dispositif selon l'invention, en fonction de la contrainte Ca appliquée sur la pièce cible.

Le capteur fixé sur la pièce fragile est configuré pour se déformer de manière plastique sous l'effet d'au moins une contrainte appliquée à la pièce fragile et conduisant à un endommagement de la pièce fragile.

La contrainte est appliquée par projection d'un projectile sur la pièce cible. La contrainte Ca (exprimé en MPa ou N/mm$^2$) peut être estimée par le produit $m \times A / S,$ m étant exprimé en Kg, A en m/s$^2$ et S en mm$^2$.

La masse du projectile est déterminée à l'aide d'une balance de précision au milligramme.

La surface d'impact est mesurée à l'aide d'un réglet sur la pièce après impact et correspond à la trace laissée par le projectile sur l'enveloppe textile en aramide. Quand celle-ci n'est pas visible, avant l'étape de projection, l'enveloppe est marquée avec des graduations de manière à déterminer précisément (au mm près) la surface d'impact à l'aide d'une caméra rapide.

L'accélération est mesurée par un accéléromètre consistant en une cellule collée sur la face avant, ou « face d'impact », de l'échantillon. Celui-ci est collé de préférence à une distance de 100 mm du point d'impact.

On néglige les phénomènes de frottement.

$Cr_M$ désigne la contrainte de rupture de la pièce

cible et $\varepsilon_{rM}$ désigne la déformation maximale, correspondant à la rupture de la pièce cible.

$Ce_{min}$ ou « contrainte d'endommagement minimale » de la pièce cible est la plus petite contrainte appliquée à la pièce cible et conduisant à un endommagement de la pièce cible par microfissuration. On considère que la fin du domaine de déformation élastique et le début du domaine de déformation plastique de la pièce cible sont définis par $Ce_{min}$, les contraintes supérieures ou égales à $Ce_{min}$ conduisant à l'endommagement de la pièce cible, sous la forme d'une microfissuration.

$Cr_C$ désigne la contrainte appliquée à la pièce cible et qui conduit à la rupture du capteur. (En pratique, la rupture de la pièce cible peut conduire à la rupture du capteur). $\varepsilon_{rC}$ désigne la déformation maximale du capteur, correspondant à sa rupture (dans l'hypothèse où la rupture de la pièce cible n'a pas détérioré le capteur).

Cs désigne la contrainte de seuil, la déformation du capteur étant élastique ou plastique selon que la contrainte appliquée à la pièce cible est inférieure ou supérieure ou égale à Cs, respectivement. $\varepsilon_s$ désigne la déformation lorsque la contrainte de seuil est appliquée.

Les parties des courbes qui correspondent à des déformations plastiques sont en gras.

On constate que, de préférence, la déformation plastique de la pièce cible ne se produit que lorsque le capteur subit lui-même une déformation plastique. Tout endommagement de la pièce cible est alors mémorisé par le capteur.

La contrainte d'endommagement minimale de la pièce cible $Ce_{min}$ est inférieure à la contrainte $Cr_C$ appliquée sur la pièce cible et qui conduit à la rupture du capteur.

De préférence, la déformation plastique du capteur commence cependant alors que la pièce cible en encore en déformation élastique. Le capteur déformation peut ainsi mémoriser une contrainte élevée n'ayant cependant pas conduit à un endommagement de la pièce cible.

De préférence, le domaine de déformation plastique du capteur se termine après que la pièce cible se soit rompue. Le capteur déformation peut ainsi mémoriser toute contrainte ayant conduit à un endommagement de la pièce cible.

La figure 4 permet d'illustrer comment le capteur réagit sous l'application d'une contrainte Ca croissante appliquée sur la pièce cible : Il se déforme d'abord élastiquement, jusqu'à application d'une contrainte de seuil Cs sur la pièce cible (trait interrompu fin, jusqu'à la déformation $\varepsilon_s$), puis plastiquement.

En particulier, la déformation du capteur 2 est plastique lorsque la contrainte appliquée sur la pièce cible atteint $Ce_{min}$ et que la pièce cible commence à se dégrader. Cette déformation plastique du capteur permet, si la contrainte cesse, de conserver une trace que des contraintes conduisant à un endommagement de la pièce cible ont été atteintes.

Si la contrainte continue d'augmenter, elle provoque une déformation plastique de la pièce cible, en plus de la déformation plastique du capteur. Elle atteint par exemple la contrainte $C_1$, correspondant à la déformation $\varepsilon_1$. Lorsque la contrainte diminue ensuite jusqu'à s'annuler, cette déformation plastique se traduit par une déformation résiduelle $\varepsilon_2$ du capteur, qui mémorise ainsi l'application de la contrainte maximale $C_1$ appliquée sur la pièce cible.

La flèche illustre la déformation du capteur lorsque la contrainte cesse après avoir atteint $C_1$, supérieure à $Ce_{min}$, et montre que la plasticité du capteur a mémorisé l'endommagement de la pièce cible.

Si la contrainte continue d'augmenter, elle atteint $Cr_M$ et la pièce cible de rompt.

De préférence, la contrainte de seuil, qui correspond à la limite de plasticité du capteur, est inférieure ou égale à la contrainte d'endommagement minimale $Ce_{min}$, c'est-à-dire que $Cs < Ce_{min}$. Toute contrainte $Ca$ appliquée sur la pièce cible et qui constitue une contrainte d'endommagement produisant une microfissuration, c'est-à-dire supérieure à la contrainte d'endommagement minimale $Ce_{min}$, produit donc une déformation plastique du capteur. Autrement dit, la déformation plastique de la pièce cible ne se produit que lorsque le capteur subit lui-même une déformation plastique.

En cas d'application d'une contrainte $Ca$ supérieure ou égale à la contrainte d'endommagement minimale, le capteur, et plus précisément le réseau conducteur, se déforme donc plastiquement, et conserve ainsi un « souvenir physique » de cette application. La propriété électrique du réseau conducteur, en particulier sa résistance électrique, est variable en fonction de la géométrie et/ou de la structure du réseau conducteur. La déformation plastique du réseau conducteur modifie de manière permanente la résistance du réseau conducteur. Le capteur permet ainsi de détecter, au moyen de la courbe de calibration, qu'une contrainte d'endommagement a été appliquée, et donc que la pièce cible est microfissurée.

En outre, la mesure de la déformation plastique permet avantageusement d'évaluer l'ampleur de la contrainte d'endommagement, et donc de la microfissuration de la pièce cible.

Dans un mode de réalisation, le domaine de déformation plastique du capteur commence alors que la pièce cible est encore en déformation élastique. Le capteur déformation peut ainsi mémoriser une contrainte élevée n'ayant pas conduit à un endommagement de la pièce cible.

De préférence, le capteur se déforme de manière élastique lorsque la contrainte appliquée sur la pièce cible n'est pas proche de la contrainte d'endommagement minimale, c'est-à-dire typiquement en fonctionnement normal de la pièce cible.

Pour éviter que le capteur ne se déforme plastiquement alors que la pièce cible n'a subi aucune contrainte d'endommagement par microfissuration, il est préférable que la contrainte de seuil soit la plus proche possible de la contrainte d'endommagement minimale. De préférence, $(Ce_{min} - Cs)/Cs < 20\%$, de préférence $(Ce_{min} - Cs)/Cs < 10\%$, de préférence $(Ce_{min} - Cs)/Cs < 5\%$, de préférence $(Ce_{min} - Cs)/Cs < 1\%$. La tolérance $(Ce_{min} - Cs)/Cs$ dépend de l'application visée.

De préférence, le capteur est configuré pour ne pas être détruit par l'application d'une contrainte quelconque sur la pièce cible qui ne conduit pas à la rupture de la pièce cible. Autrement dit, le capteur reste opérationnel tant que la contrainte appliquée sur la pièce cible ne conduit pas à la rupture de la pièce cible. Sur la figure 4, on constate en particulier que le domaine de déformation plastique du capteur se termine après que la pièce céramique se soit rompue. Le capteur déformation peut ainsi mémoriser toute contrainte ayant conduit à un endommagement de la pièce cible.

L'exemple ci-dessus nécessite de choisir un matériau pour la phase céramique qui présente un domaine de déformation élastique plus limité que celui du matériau de la pièce cible et qui, de préférence présente un domaine plastique qui s'étend au-delà de celui du matériau de la pièce cible.

### Alerte par rupture

Dans un mode de réalisation, le capteur est choisi de manière à rompre sous l'effet d'une contrainte $Cs'$ appliquée sur la pièce cible inférieure à la contrainte $Cr$ conduisant à la rupture de la pièce cible, de préférence inférieure à $Ce_{min}$.

De préférence, $(Cr - Cs')/Cs' < 20\%$, de préférence $(Cr - Cs')/Cs' < 10\%$, de préférence $(Cr - Cs')/Cs' < 5\%$, de préférence $(Cr - Cs')/Cs' < 1\%$.

La rupture du capteur conduit ainsi à une alerte, en mode « tout ou rien », et déclenche par exemple une alarme d'arrêt d'utilisation de la pièce cible.

### Mesure de la fatigue

Un capteur sous la forme d'un patch est fixé sur une plaque céramique de SiC au moyen d'une couche de colle thermodurcissable à base époxyde. L'épaisseur de la couche de colle est sensiblement constante et inférieure à 0,5 mm.

Le dispositif ainsi fabriqué est calibré, comme décrit ci-dessus, en appliquant des contraintes répétées, mais qui ne conduisent pas une microfissuration. On établit ainsi une courbe de calibration permettant d'évaluer l'état de fatigue de la pièce, du type de la courbe 24'.

L'évolution de la propriété électrique, en l'occurrence de la résistance électrique du réseau conducteur, est plus progressive que lors de la détection de microfissures, qui conduisent rapidement à la destruction de la pièce cible.

Bien entendu, il est possible, avec le même capteur ou avec des capteurs différents, d'évaluer à la fois le niveau de fatigue, et le risque d'apparition ou l'occurrence de microfissures. La valeur de la résistance permet également, au moyen de la courbe de calibration, d'évaluer l'ampleur de la fatigue et/ou de la microfissuration.

### Turbine à gaz

Aucun dispositif ne permet aujourd'hui de contrôler rapidement, à tout moment et à faible coût, l'intégrité des pièces en céramique utilisées dans des applications où la température excède 350°C.

Dans le cas de turbines terrestres, les tuiles en céramique sont classiquement positionnées sur les parois de la chambre de combustion. Ces tuiles sont soumises à un fort gradient thermique (environ 1500°C sur la face chaude et environ 600°C sur la face froide opposée, orientée vers la chambre de combustion). La détérioration soudaine d'une tuile peut avoir des conséquences graves, en particulier si un débris de tuile vient endommager une des pâles de la turbine.

On prépare une charge de départ sous la forme d'une barbotine dans laquelle des particules d'alumine présentant une longueur de 1 micron environ, et des particules conductrices, sous la forme de fibres de Platine (Pt) de 100 nanomètres, du type de celles décrites dans WO2010003389A2, sont mélangées dans de l'isopropanol. La composition de la barbotine, en pourcentages volumiques, est de préférence la suivante : 15% de fibres de platine, 30% de particules d'alumine, et 55% de solvant et d'additifs de mise en forme.

Dans un mode de réalisation, les particules d'alumine sont remplacées par des particules de SiC ou de BN.

Dans un mode de réalisation, les fibres de Platine (Pt) sont remplacées par des nanotubes de carbone.

Un film de la barbotine est déposé par coulage sur une tuile fabriquée par exemple selon l'enseignement de WO2015011623A1, puis séché à 110°C pour obtenir un film d'épaisseur moyenne d'environ 500µm.

Dans le capteur selon l'invention obtenu, les particules conductrices sont enrobées dans la phase céramique.

Des fils de platine sont connectés à chaque extrémité du réseau conducteur, de manière à permettre une connexion électrique à un Ohm-mètre.

Le capteur est ensuite fixé sur la face froide d'une tuile céramique d'une turbine à gaz, de préférence par collage céramique ou adhésion mécanique. Le capteur peut en particulier être fixé à l'aide d'une colle céramique haute température Pyro-Putty #653 fournie par Aremco.

On constate que la précision du capteur permet de détecter de faibles variations de la résistance électrique du réseau conducteur, et donc d'anticiper la survenue de phénomènes préjudiciables.

### Support de cuisson

Un capteur selon l'invention, sous la forme d'un patch, est collé à la surface d'un support de cuisson.

Après chaque utilisation du support de cuisson, la résistance électrique du réseau conducteur est mesurée entre deux points de connexion. On constate que la résistance électrique augmente, vraisemblablement sous l'effet de la rupture progressive de « ponts » entre les particules conductrices. La mesure de la résistance permet ainsi avantageusement d'estimer la fatigue de la pièce cible.

### Meule abrasive

La mesure de la propriété électrique du capteur, de préférence de la résistance électrique du réseau conducteur, est également utile pour évaluer l'usure d'une meule abrasive.

Un capteur peut être disposé en surface d'une meule abrasive, de préférence sous la forme d'un patch collé sur le côté de la meule, de préférence perpendiculairement à la surface de travail de la meule.

Le capteur est de préférence « intégré » dans la pièce cible. En particulier, les particules céramiques du capteur peuvent être des grains abrasifs de la meule ou, de préférence, être dispersées dans tout ou partie de la matrice qui lie les grains abrasifs de la meule, en particulier lorsque les grains abrasifs sont trop gros pour constituer des particules céramiques fines.

Le capteur peut ainsi servir pour mesurer la réduction progressive du volume de la meule lors de son utilisation, et pour évaluer son intégrité. Ces informations permettent avantageusement de gérer de façon optimale l'utilisation et le remplacement de la meule.

### Capteur sous la forme d'un CMC

Des particules conductrices et/ou des précurseurs de telles particules sont incorporées dans un non tissé céramique ou dans un tissé céramique constitué de fibres céramiques, de préférence orientées selon un plan préférentiel, de préférence selon une direction préférentielle.

Les particules conductrices sont de préférence fabriquées par fonctionnalisation de fibres céramiques, identiques ou différentes des fibres céramiques qui constituent le non tissé céramique. Les méthodes de fonctionnalisation décrites ci-dessus peuvent être mises en oeuvre à cet effet.

L'incorporation des particules conductrices peut être réalisée par coulage en bande, par pressage ou par un dépôt par couche.

La structure constituée du non tissé céramique dans lequel les particules conductrices ont été incorporées est ensuite frittée, de préférence jusqu'à l'obtention d'une porosité ouverte inférieure à 10%, de préférence inférieure à 5%, et de préférence supérieure à 1%.

### Capteur sous la forme d'une plaque fine

Des plaquettes d'alumine présentant une longueur comprise entre 10 et 100 $\mu$m et un rapport d'aspect compris entre 20 et 50, et des particules conductrices en un métal choisi parmi Ag, Cu, Pt et Fe sont dispersées dans de l'isopropanol pour constituer une barbotine.

Des précurseurs des particules conductrices peuvent être utilisées pour remplacer, au moins en partie les particules conductrices. Ils sont alors réduits pour être transformées en dites particules conductrices.

La barbotine est coulée en bande (« tape casting »), de manière classique. L'épaisseur de la bande est de préférence comprise entre 100 et 600 micromètres de manière à orienter les plaquettes.

La bande est ensuite frittée de préférence jusqu'à l'obtention d'une porosité ouverte inférieure à 10%, de préférence inférieure à 5%, et de préférence supérieure à 1%.

On obtient une plaque mince, dont le comportement est anisotrope du fait de l'orientation des plaquettes. Les particules conductrices créent un réseau conducteur orienté préférentiellement parallèlement aux plaquettes.

### Capteur poreux

On fabrique un corps poreux fritté suivant l'enseignement de PCT/IB2013/060700.

Le corps poreux présente de préférence une porosité en volume comprise entre 30% et 70%, de préférence entre 40% et 60%.

Le corps poreux présente des pores tubulaires sensiblement parallèles. Les plaquettes utilisés peuvent être notamment des plaquettes d'alumine, d'alpha-SiC ou d'AlN. Elles présentent de préférence une longueur comprise entre 10 et 100 $\mu$m et un rapport d'aspect compris entre 20 et 50.

Le corps poreux est ensuite imprégné d'une barbotine constituée de particules conductrices, de préférence métalliques, en suspension dans un solvant (forme (a5)). La quantité de particules conductrices est adaptée pour obtenir, après séchage, un réseau conducteur dont la résistance électrique est modifiable par déformation et/ou fatigue.

La longueur des particules conductrices est inférieure à 1 $\mu$m, de préférence inférieure ou égale à 100 nm.

L'imprégnation peut être réalisée sous vide ou, plus généralement, en créant un gradient de pression favorisant la pénétration de la barbotine dans les pores tubulaires.

Le dépôt de particules conductrices peut être également réalisé par pulvérisation de la barbotine, de préférence à température ambiante.

Le dépôt de particules conductrices peut être encore réalisé par infiltration de la barbotine, de préférence sous une pression résiduelle inférieure ou égale à 0,1 bar, de préférence à température ambiante. Dans ce mode de réalisation, la viscosité de la barbotine, mesurée à température ambiante, est de préférence comprise entre 0,5 et 20 centipoises. Le temps d'infiltration est de préférence de 5 minutes à quelques heures, selon l'épaisseur du corps poreux. La barbotine est de préférence une solution colloïdale.

Notamment dans ce dernier mode de réalisation, le corps poreux peut être remplacé par le corps crû qui, par frittage, conduit au corps poreux.

Les particules conductrices peuvent être remplacées par des précurseurs de particules conductrices, qui sont ensuite réduits sous la forme de particules conductrices métalliques. En particulier, un mélange d'ions métalliques et d'un réducteur chimique peut être déposé par voie « electroless », l'ion métallique, comme décrit par exemple dans US5681617A, de préférence à moins de 100°C, de préférence à température ambiante. Un catalyseur, en particulier un métal catalytique, peut être ajouté au mélange pour accélérer la transformation des précurseurs de particules conductrices en particules conductrices.

Pour améliorer la fixation des particules métalliques ou des précurseurs de particules conductrices, le corps poreux peut être fonctionnalisé avec un thiol ou un silane. En particulier, le silane peut présenter un groupe polaire tel qu'un groupe amine, phosphonate, sulphonate ou carboxylate.

Après séchage à une température comprise entre 50°C et 150°C, et traitement éventuel pour transformer les précurseurs de particules conductrices en particules conductrices, on obtient un réseau conducteur qui s'étend à la surface des pores. Ce réseau conducteur est avantageusement protégé par le corps poreux. Il est également avantageusement orienté préférentiellement du fait qu'il s'appuie sur des pores orientés préférentiellement.

L'imprégnation ou la percolation peut être totale ou, de préférence partielle de manière à dimensionner le réseau conducteur comme souhaité.

De préférence, après dépôt des particules conductrices ou des précurseurs des particules conductrices, on dépose de préférence, au-dessus desdites particules conductrices ou desdits précurseurs des particules conductrices, une couche de particules céramiques formant une phase céramique. Avantageusement, cette couche isole électriquement et protège physiquement.

De préférence, le procédé est adapté de manière que la porosité ouverte résiduelle du corps poreux ainsi obtenu, qui constitue un capteur selon l'invention, soit comprise entre 1 et 10% en volume. Avantageusement, ce capteur présente un domaine de déformabilité plastique.

Pour assurer la connexion entre les bornes de connexion et le réseau conducteur constitué dans la porosité ouverte, un film métallique, de préférence en un métal choisi parmi Cu, Au, Pt, Pd, Ag, Sn, Al, Ni, Pb, Zn et leurs alliages, peut être réalisé par métallisation / pulvérisation à la surface du corps poreux et en contact avec le réseau conducteur.

Dans un mode de réalisation, les particules conductrices sont mélangées avec les plaquettes d'alumine avant constitution du corps poreux. De préférence, elles représentent plus de 10% en masse des particules, le complément à 100% étant constitué par des plaquettes d'alumine.

On décrit à présent différents modes de réalisation particulièrement préférés :
Dans un mode de réalisation, on fabrique d'abord des fibres composites comportant chacune un noyau central revêtu au moins partiellement par un revêtement conducteur électriquement.

Chaque noyau, de préférence en un verre, de préférence en silice, présente un rapport de forme compris entre 2 et 20 0000, et une longueur comprise entre 5 mm et 5 m. Les noyaux sont obtenus par filage à partir d'un mélange de silice en fusion, de préférence obtenu par fusion de quartz.

Une solution comportant des sels métalliques (précurseurs des particules conductrices) est appliquée à la surface des noyaux par électrodéposition Les noyaux revêtus de la solution sont alors séchés, de manière à durcir le revêtement et obtenir des particules conductrices sous la forme de fibres composites.

Les particules conductrices sont ensuite incorporées dans la fabrication de fils, par mélange avec les autres constituants des fils avant leur assemblage pour constituer ces fils. De préférence, aucun des autres constituants n'est conducteur électriquement.

Les particules conductrices représentent de préférence plus de 10% de la masse des fils.

On obtient ainsi des premiers fils fonctionnalisés. De préférence, les particules conductrices sont sensiblement uniformément réparties dans lesdits premiers fils fonctionnalisés.

Dans un autre mode de réalisation, on dispose des particules conductrices sur des fils, monoblocs ou de préférence constitués chacun d'un assemblage de plusieurs centaines de filaments. De préférence, les fils sont en un verre, de préférence en silice.

On obtient ainsi des deuxièmes fils fonctionnalisés sur lesquels les particules conductrices sont de préférence sensiblement uniformément réparties.

Dans un mode de réalisation, des particules conductrices constituant des troisièmes fils peuvent être utilisées.

Les premiers et/ou deuxièmes fils et/ou troisièmes fils présentent de préférence une longueur comprise entre 5 cm et 5 km, de préférence entre 5 cm et 5 m.

Les premiers et/ou deuxièmes et/ou troisièmes fils, et optionnellement des quatrièmes fils ne portant pas de particules conductrices, de préférence en un verre, de préférence en silice, servent de préférence à fabriquer un textile, de préférence sous la forme d'un feutre, d'une nappe de fils parallèles, d'un tissé ou d'un tricot, ou d'un assemblage d'un ou plusieurs dits feutres, nappes, tissés ou tricots. Les techniques conventionnelles de fabrication peuvent être utilisées.

Les premiers et/ou deuxièmes et/ou troisièmes fils, et optionnellement des quatrièmes fils peuvent être mélangés, de manière à former un feutre. De préférence, les fils mélangés présentent alors, de préférence, une longueur comprise entre 5 cm et 5km, de préférence entre 5 cm et 5 m.

Alternativement, les premiers et/ou deuxièmes et/ou troisièmes fils peuvent être disposés parallèlement les uns aux autres sous forme d'une couche ou de plusieurs nappes. Les nappes peuvent être ensuite assemblées ensemble, par exemple cousues les unes aux autres. L'orientation des fils de deux nappes successives est de préférence différente.

Les premiers et/ou deuxièmes et/ou troisièmes fils, et optionnellement des quatrièmes fils peuvent être disposés encore tricotés ou tissés sous forme d'un tricot ou d'un tissé. Plusieurs tricots et/ou tissés ainsi fabriqués peuvent être superposées et assemblées, par exemple cousus. Des couches textiles intermédiaires dépourvues de de particules conductrices peuvent être interposées entre deux dits tricots et/ou tissés. L'orientation des fils de deux tricots et/ou tissés et/ou couches intermédiaires successifs est de préférence différente. Une couche intermédiaire peut être par exemple un non tissé, un tissé ou un tricot, formé avec des quatrièmes fils.

De préférence, des quatrièmes fils sont disposés entre des premiers et/ou deuxièmes et/ou troisièmes fils.

Dans un mode de réalisation préféré, un textile, de préférence sous la forme d'un feutre, d'une nappe de fils parallèles, d'un tissé ou d'un tricot, ou d'un assemblage d'un ou plusieurs dits feutres, nappes, tissés ou tricots, est fabriqué avec des quatrièmes fils, dépourvus de particules conductrices. Les techniques conventionnelles de fabrication peuvent être utilisées. On dispose des particules conductrices sur les quatrièmes fils, de préférence par imprégnation avec un barbotine contenant les particules conductrices ou des précurseurs de particules conductrices.

Bien entendu, on peut combiner les techniques décrites ci-dessus. En particulier, des particules conductrices peuvent être disposées à la surface d'un textile comportant des premiers et/ou deuxièmes fils.

Comme cela apparaît clairement à présent, l'invention fournit donc un capteur dans lequel la phase céramique assure une protection thermique et/ou contre l'abrasion au réseau conducteur. Elle permet, de manière simple, de

- détecter l'application passée d'une contrainte d'endommagement sur une pièce cible, par exemple d'un choc thermique ou mécanique, à une température supérieure à 400°C,
- évaluer ladite contrainte et/ou ledit endommagement, en particulier la microfissuration et/ou la fatigue de la pièce cible.

L'invention est avantageusement applicable pour des pièces cibles de géométrie quelconque. En outre, l'invention ne modifie sensiblement pas l'encombrement de ces pièces.

Enfin, l'invention permet de détecter des déformations de faibles amplitudes, le capteur étant très sensible. Il permet donc la détection de signaux faibles, et donc d'anticiper une dégradation catastrophique de la pièce cible.

Bien entendu, l'invention n'est pas limitée aux modes de réalisation décrits et représentés, fournis à des fins illustratives seulement.

En particulier, la position du capteur sur la pièce et le nombre de capteurs de déformation ne sont pas limitatifs.

## Revendications

1. Capteur destiné au contrôle d'une pièce cible, le capteur comportant :

   - un ensemble de particules conductrices électriquement (6), au moins une partie des particules conductrices constituant un réseau conducteur (7) dont une propriété électrique est fonction d'un agencement des particules conductrices constituant le réseau conducteur, ledit agencement étant modifiable,
   - une phase céramique (4) de protection du réseau conducteur, la phase céramique étant constituée de particules céramiques, la phase céramique comportant plus de 90% de particules céramiques présentant une longueur comprise entre 0,1 et 100 $\mu$m, dites « particules céramiques fines », en pourcentage en nombre,

   les particules céramiques étant en un matériau présentant une résistivité électrique, mesurée à 20°C, supérieure à 1 $\Omega$.m, l'agencement des particules conductrices étant « modifiable » en ce que, sous l'effet d'une contrainte, l'agencement des particules conductrices du réseau conducteur est modifié de sorte qu'il en résulte une modification de l'impédance du réseau conducteur,

   le capteur étant **caractérisé en ce que** :

   - le capteur est destiné au contrôle d'une pièce cible à une température supérieure à 400°C,
   - plus de 90% des particules conductrices, dites « particules conductrices allongées », en pourcentage en nombre, présentent un facteur de forme supérieur à 2 et une épaisseur inférieure à 20 000 nanomètres, le rapport de forme d'une particule étant égal au rapport de la longueur de ladite particule divisée par l'épaisseur de ladite particule, et

- les particules conductrices sont en un matériau présentant une résistivité électrique, mesurée à 20°C, inférieure à 1 mΩ.m.

2. Capteur selon la revendication précédente, dans lequel les particules conductrices allongées présentent une épaisseur inférieure à 1000 nanomètres, la longueur desdites particules conductrices est inférieure à 1000 nanomètres, et plus de 90% des particules conductrices allongées, en pourcentage en nombre, présentent un facteur de forme supérieur à 5.

3. Capteur selon la revendication immédiatement précédente, dans lequel plus de 90% des particules conductrices allongées, en pourcentage en nombre, présentent un facteur de forme supérieur à 100, et dans lequel les particules conductrices allongées présentent une épaisseur inférieure 500 nanomètres.

4. Capteur selon l'une quelconque des revendications précédentes, dans lequel au moins les particules conductrices allongées sont

- des particules, de préférence des fibres, en un métal ou en un métalloïde, de préférence en Platine, et/ou
- des nanotubes de carbone et/ou des particules composites comportant un noyau central non conducteur revêtu d'un revêtement, au moins partiel, en un métal ou en un métalloïde, et/ou
- des particules composites comportant un noyau central céramique fonctionnalisé dans la masse de manière à être conducteur électriquement, et/ou

dans lequel la phase céramique est constituée, pour plus de 80% de sa masse, d'un ou plusieurs composé(s) choisi(s) dans le groupe formé par $Al_2O_3$, $ZrO_2$, $Cr_2O_3$ ; MgO, CaO, $SiO_2$, SiC $\alpha$ ou $\beta$, BN, $B_4C$, C sous forme de diamant, $Si_3N_4$, AIN, et les oxynitrures de Silicium dont les SiAlON.

5. Capteur selon la revendication immédiatement précédente, dans lequel les particules conductrices allongées sont constituées, pour plus de 80% de leur masse, en un ou plusieurs constituants choisi(s) dans le groupe formé par Ag, Al, Au, Cu, Fe, Ge, Mo, Ni, Pd, Pt, Rh, Si, Ta, Ti, W, le graphite, le graphène, $TiB_2$, TiC, TiN, $ZrB_2$, ZrC, ZrN, $VB_2$, VC, VN, $CrB_2$, CrBN et WC.

6. Capteur selon l'une quelconque des revendications précédentes, dans lequel

- les particules conductrices allongées du réseau conducteur sont réparties de manière homogène dans la phase céramique, ou
- les particules conductrices allongées du réseau conducteur sont réparties dans au moins une couche, dite « couche conductrice », et les particules céramiques de la phase céramique sont réparties dans au moins une couche, dite « couche céramique », lesdites couches conductrice et céramique étant superposées l'une à l'autre.

7. Capteur selon l'une quelconque des revendications précédentes, dans lequel les particules conductrices allongées et/ou les particules céramiques fines et/ou le réseau conducteur (7) présentent une orientation préférentielle, et/ou dans lequel le réseau conducteur forme un circuit fermé sur lui-même.

8. Capteur selon l'une quelconque des revendications précédentes, dans lequel la phase céramique forme une couche continue interposée entre le réseau conducteur et l'environnement extérieur du capteur.

9. Capteur selon l'une quelconque des revendications précédentes,

- comportant une phase céramique fibreuse dans laquelle les particules conductrices du réseau conducteur sont dispersées, et/ou
- comportant un textile, les particules conductrices étant fixées sur des fils dudit textile et/ou intégrées dans des fils dudit textile et/ou constituant des fils dudit textile,

capteur dans lequel la phase céramique est frittée.

10. Procédé de fabrication d'un capteur selon l'une quelconque des revendications précédentes, destiné à la surveillance de l'état physique d'une pièce cible, le procédé comportant les étapes suivantes :

a) préparation d'une charge de départ

- sous une forme (a1) d'une barbotine comportant

- des particules céramiques et/ou des précurseurs de particules céramiques, et
- des particules conductrices et/ou des précurseurs de particules conductrices ; ou

- sous une forme (a2) d'une première barbotine comportant des particules céramiques et/ou des précurseurs de particules céramiques, et d'une deuxième barbotine, différente de la première barbotine, comportant des particules conductrices et/ou des précurseurs de particules conductrices ; ou

- sous une forme (a3) d'une poudre comportant

    - des particules céramiques et/ou des précurseurs de particules céramiques, et
    - des particules conductrices et/ou des précurseurs de particules conductrices ; ou

- sous une forme (a4) d'une première poudre comportant des particules céramiques et/ou des précurseurs de particules céramiques, et d'une deuxième poudre, différente de la première poudre, comportant des particules conductrices et/ou des précurseurs de particules conductrices-ou
- sous une forme (a5) d'une barbotine comportant des particules conductrices et/ou des précurseurs de particules conductrices ; ou
- sous une forme (a6) d'une poudre comportant des particules conductrices et/ou des précurseurs de particules conductrices ; ou
- sous une forme (a7) d'une barbotine comportant des particules céramiques et/ou des précurseurs de particules céramiques, sur lesquelles des particules conductrices et/ou des précurseurs de particules conductrices sont fixées ; ou
- sous une forme (a8) d'une poudre comportant des particules céramiques et/ou des précurseurs de particules céramiques, sur lesquelles des particules conductrices et/ou des précurseurs de particules conductrices sont fixées ;

b) mise en forme de la charge de départ de manière à obtenir une préforme, ladite mise en forme étant

    (b1) par dépôt de la charge de départ, de préférence sous la forme d'une ou plusieurs couches, de préférence, lorsque la charge de départ est sous la forme (a1), (a2), (a5) ou (a7), par coulage en bande ou par pulvérisation, de préférence par coulage en bande, de préférence sur une épaisseur comprise entre 0,05 et 3 mm, sur un substrat, provisoire ou définitif, de préférence sur une pièce crue de la pièce cible ou sur la pièce cible, ou
    (b2) par intégration de la charge de départ dans la masse d'un substrat, de préférence dans une pièce crue de la pièce cible ou dans la pièce cible, de préférence, lorsque la charge de départ est sous la forme (a1), (a2) ou (a5), par imprégnation du substrat, ou
    (b3) lorsque la charge de départ est sous la forme (a1), (a3), (a7) ou (a8), par mise en forme de la charge de départ sous la forme de la pièce cible ou d'une pièce crue de la pièce cible,

puis, si la charge de départ mise en forme comporte une phase liquide, séchage de la charge de départ mise en forme;
c) consolidation thermique de la préforme de manière à obtenir une masse de mesure constituée d'un réseau conducteur constitué des particules conductrices et d'une phase céramique ;
d) optionnellement, fixation de la masse de mesure sur un support et/ou fixation d'une couche d'interfaçage sur la masse de mesure et/ou sur le support,

les particules céramiques, précurseurs de particules céramiques, particules conductrices et précurseurs de particules conductrices étant choisis de manière à obtenir, à l'issue de l'étape c) ou de l'étape d), un capteur selon l'une quelconque des revendications précédentes.

11. Procédé de fabrication selon la revendication immédiatement précédente, dans lequel le substrat est un corps poreux présentant une porosité ouverte orientée supérieure à 30% en volume et/ou est fibreux, et dans lequel, à l'étape b),

    - on dépose, sur des pores à l'intérieur du corps poreux, des précurseurs de particules métalliques ou des précurseurs de particules conductrices en un matériau céramique, puis on réduit thermiquement ou chimiquement lesdits précurseurs pour constituer les particules conductrices, ou
    - on dépose, sur des pores à l'intérieur du corps poreux, une barbotine constituée de particules métalliques ou de particules conductrices en un matériau céramique, en suspension dans un solvant, puis on évapore le solvant,

    de manière à constituer un réseau conducteur,
    procédé lequel, après dépôt des particules conductrices, on dépose une couche en un matériau céramique sur le réseau conducteur, et, de préférence, on fritte ladite couche.

12. Dispositif comportant une pièce cible et un capteur selon l'une quelconque des revendications 1 à 9 le capteur étant fixé sur la pièce cible ou intégré dans la pièce cible, pour que le réseau conducteur se déforme sous l'effet d'une contrainte appliquée sur la pièce cible.

13. Dispositif selon la revendication immédiatement précédente, dans lequel la pièce cible est choisie dans un groupe constitué par une tuile réfractaire, une pièce céramique d'un absorbeur solaire, un support de cuisson, un bloc réfractaire de four, une pièce de protection contre l'abrasion, un abrasif aggloméré, un outil de coupe en céramique, un élément de pompe ou de circuit hydraulique en céramique, un support ou un tube isolant électrique en céramique, un carreau céramique ou une pièce céramique ou vitrocéramique de parement, une plaque, un tube comprenant un matériau vitrocéramique, une plaquette ou un disque de frein ou un objet en céramique d'un dispositif de freinage, un vitrage, un filtre pour la filtration liquide ou gazeuse, un radôme.

14. Kit comportant

- un dispositif selon l'une quelconque des deux revendications immédiatement précédentes, et
- un appareil de mesure adapté pour mesurer, après branchement entre deux bornes de connexion du réseau conducteur ou sans contact, une propriété électrique du réseau conducteur.

15. Procédé de surveillance de l'état physique d'une pièce cible, ledit procédé comportant les étapes suivantes :

1) à un instant initial, fixation d'un capteur selon l'une quelconque des revendications 1 à 9 sur la pièce cible ou intégration d'un capteur selon l'une quelconque des revendications 1 à 9 dans la pièce cible, de manière à constituer un dispositif selon l'une quelconque des revendications 12 et 13;
2) calibration du dispositif de manière à déterminer une relation entre ledit état physique et une propriété électrique du réseau conducteur du capteur ;
3) mise en service du dispositif dans un environnement à une température de service, puis, à un instant actualisé, mesure de ladite propriété à ladite température de service et, à partir de ladite relation, détermination dudit état physique à l'instant actualisé.

16. Procédé de surveillance selon la revendication immédiatement précédente, dans lequel la température de service est supérieure à 400°C, et dans lequel la détermination dudit état physique comprend une détection d'une microfissuration et/ou une détection ou une mesure d'une fatigue de la pièce cible.

17. Procédé de surveillance selon l'une quelconque des deux revendications immédiatement précédentes, dans lequel la calibration est effectuée à partir de mesures de la propriété électriques réalisées à ladite température de service.

**Patentansprüche**

1. Sensor, der zur Prüfung eines Zielwerkstücks bestimmt ist, wobei der Sensor umfasst:

- eine Menge von elektrisch leitfähigen Partikeln (6), wobei mindestens ein Teil der leitfähigen Partikel ein leitfähiges Netz (7) bildet, bei dem eine elektrische Eigenschaft von einer Anordnung der das leitfähige Netz bildenden leitfähigen Partikel abhängig ist, wobei die Anordnung änderbar ist,
- eine keramische Phase (4) zum Schutz des elektrischen Netzes, wobei die keramische Phase aus keramischen Partikeln besteht, wobei die keramische Phase zahlenmäßig in Prozent mehr als 90 % keramische Partikel umfasst, die eine Länge zwischen 0,1 und 100 $\mu$m aufweisen, "feine keramische Partikel" genannt,

wobei die keramischen Partikel aus einem Material sind, das einen bei 20 °C gemessenen spezifischen Widerstand von mehr als 1 Q.m aufweist,
wobei die Anordnung der leitfähigen Partikel dahingehend "änderbar" ist, dass die Anordnung der leitfähigen Partikel des leitfähigen Netzes unter der Einwirkung einer Belastung so geändert wird, dass daraus eine Änderung der Impedanz des leitfähigen Netzes resultiert, wobei der Sensor **dadurch gekennzeichnet ist, dass**:

- der Sensor zur Prüfung eines Zielwerkstücks bei einer Temperatur von mehr als 400 °C bestimmt ist,
- zahlenmäßig in Prozent mehr als 90 % der leitfähigen Partikel, "längliche leitfähige Partikel" genannt, einen Formfaktor von mehr als 2 und eine Dicke von weniger als 20 000 Nanometer aufweisen, wobei das Formverhältnis eines Partikels gleich dem Verhältnis der Länge des Partikels dividiert durch die Dicke des Partikels ist, und

- die leitfähigen Partikel aus einem Material sind, dass einen bei 20 °C gemessenen spezifischen Widerstand von weniger als 1 mΩ.m aufweist.

2. Sensor nach dem vorhergehenden Anspruch, bei dem die länglichen leitfähigen Partikel eine Dicke von weniger als 1000 Nanometer aufweisen, wobei die Länge der leitfähigen Partikel weniger als 1000 Nanometer beträgt, und zahlenmäßig in Prozent mehr als 90 % länglichen leitfähigen Partikel einen Formfaktor von mehr als 5 aufweisen.

3. Sensor nach dem unmittelbar vorhergehenden Anspruch, bei dem zahlenmäßig in Prozent mehr als 90 % der länglichen leitfähigen Partikel einen Formfaktor von mehr als 100 aufweisen und bei dem die länglichen leitfähigen Partikel eine Dicke von weniger als 500 Nanometer aufweisen.

4. Sensor nach einem der vorhergehenden Ansprüche, bei dem mindestens die länglichen leitfähigen Partikel

    - Partikel, bevorzugt Fasern, aus einem Metall oder aus einem Halbmetall, bevorzugt aus Platin, sind, und/oder
    - Kohlenstoffnanoröhrchen und/oder Kompositpartikel sind, die einen nicht leitfähigen zentralen Kern umfassen, der mindestens teilweise mit einem Überzug aus einem Metall oder aus einem Halbmetall überzogen ist, und/oder
    - Kompositpartikel sind, die einen keramischen zentralen Kern umfassen, der in der Masse so funktionalisiert ist, dass er elektrisch leitfähig ist, und/oder

bei dem die keramische Phase zu mehr als 80 % ihrer Masse aus einer oder mehreren Verbindung(en) besteht, die aus der Gruppe gewählt ist (sind), die aus $Al_2O_3$, $ZrO_2$, $Cr_2O_3$; MgO, CaO, $SiO_2$, α- oder β-SiC, BN, $B_4C$, C in Form von Diamant, $Si_3N_4$, AlN, und den Siliciumoxinitriden, darunter den SiAlON, gebildet wird.

5. Sensor nach dem unmittelbar vorhergehenden Anspruch, bei dem die länglichen leitfähigen Partikel zu mehr als 80 % ihrer Masse aus einer oder mehreren Komponente(n) bestehen, die aus der Gruppe gewählt ist (sind), die aus Ag, Al, Au, Cu, Fe, Ge, Mo, Ni, Pd, Pt, Rh, Si, Ta, Ti, W, Graphit, Graphen, $TiB_2$, TiC, TiN, $ZrB_2$, ZrC, ZrN, $VB_2$, VC, VN, $CrB_2$, CrBN und WC gebildet wird.

6. Sensor nach einem der vorhergehenden Ansprüche, bei dem

    - die länglichen leitfähigen Partikel des leitfähigen Netzes homogen in der keramischen Phase verteilt sind, oder
    - die länglichen leitfähigen Partikel des leitfähigen Netzes in mindestens einer Schicht, "leitfähige Schicht" genannt, verteilt sind und die keramischen Partikel der keramischen Phase in mindestens einer Schicht, "keramische Schicht" genannt, verteilt sind, wobei die leitfähigen und keramischen Schichten übereinander angeordnet sind.

7. Sensor nach einem der vorhergehenden Ansprüche, bei dem die länglichen leitfähigen Partikel und/oder die feinen keramischen Partikel und/oder das leitfähige Netz (7) eine bevorzugte Ausrichtung aufweisen und/oder bei dem das leitfähige Netz einen in sich geschlossenen Kreis bildet.

8. Sensor nach einem der vorhergehenden Ansprüche, bei dem die keramische Phase eine durchgehende Schicht bildet, die zwischen dem leitfähigen Netz und der Außenumgebung des Sensors angeordnet ist.

9. Sensor nach einem der vorhergehenden Ansprüche,

    - umfassend eine faserige keramische Phase, in der die leitfähigen Partikel des leitfähigen Netzes dispergiert sind, und/oder
    - umfassend ein Textil, wobei die leitfähigen Partikel auf Fäden des Textils fixiert sind und/oder in Fäden des Textils integriert sind und/oder Fäden des Textils bilden, wobei in dem Sensor die keramische Phase gesintert ist.

10. Verfahren zur Herstellung eines Sensors nach einem der vorhergehenden Ansprüche, der zur Überwachung des physikalischen Zustand eines Zielwerkstücks bestimmt ist, wobei das Verfahren die folgenden Schritte umfasst:

    a) Vorbereiten eines Ansatzes

        - in einer Form (a1) eines Schlickers, umfassend

            - keramische Partikel und/oder Vorstufen von keramischen Partikeln, und
            - leitfähige Partikel und/oder Vorstufen von leitfähigen Partikeln; oder

        - in einer Form (a2) eines ersten Schlickers, der keramische Partikel und/oder Vorstufen von keramischen Partikeln umfasst, und eines zweiten Schlickers, der verschieden von dem ersten Schlicker ist und der leitfähige Partikel und/oder Vorstufen von leitfähigen Partikeln umfasst; oder

- in einer Form (a3) eines Pulvers, umfassend

 - keramische Partikel und/oder Vorstufen von keramischen Partikeln, und
 - leitfähige Partikel und/oder Vorstufen von leitfähigen Partikeln; oder

- in einer Form (a4) eines ersten Pulvers, das keramische Partikel und/oder Vorstufen von keramischen Partikeln umfasst, und eines zweiten Pulvers, das verschieden von dem ersten Pulver ist und das leitfähige Partikel und/oder Vorstufen von leitfähigen Partikeln umfasst; oder
- in einer Form (a5) eines Schlickers, der leitfähige Partikel und/oder Vorstufen von leitfähigen Partikeln umfasst; oder
- in einer Form (a6) eines Pulvers, das leitfähige Partikel und/oder Vorstufen von leitfähigen Partikeln umfasst; oder
- in einer Form (a7) eines Schlickers, der keramische Partikel und/oder Vorstufen von keramischen Partikeln umfasst, auf denen leitfähige Partikel und/oder Vorstufen von leitfähigen Partikeln fixiert sind; oder
- in einer Form (a8) eines Pulvers, das keramische Partikel und/oder Vorstufen von keramischen Partikeln umfasst, auf denen leitfähige Partikel und/oder Vorstufen von leitfähigen Partikeln fixiert sind;

b) Informbringen des Ansatzes, so dass ein Vorformling erhalten wird, wobei dieses Informbringen erfolgt

 (b1) durch Aufbringen des Ansatzes, bevorzugt in Form einer oder mehrerer Schichten, bevorzugt, wenn der Ansatz in der Form (a1), (a2), (a5) oder (a7) vorliegt, durch Bandgießen oder durch Sprühen, bevorzugt durch Bandgießen, bevorzugt über eine Dicke zwischen 0,05 und 3 mm, auf ein provisorisches oder endgültiges Substrat, bevorzugt auf ein Rohwerkstück des Zielwerkstücks oder auf das Zielwerkstück, oder
 (b2) durch Integrieren des Ansatzes in die Masse eines Substrats, bevorzugt in ein Rohwerkstück des Zielwerkstücks oder in das Zielwerkstück, bevorzugt, wenn der Ansatz in der Form (a1), (a2) oder (a5) vorliegt, durch Imprägnieren des Substrats, oder
 (b3) wenn der Ansatz in der Form (a1), (a3), (a7) oder (a8) vorliegt, durch Informbringen des Ansatzes in Form des Zielwerkstücks oder eines Rohwerkstücks des Zielwerkstücks,

dann, wenn der in Form gebrachte Ansatz eine flüssige Phase umfasst, Trocknen des in Form gebrachten Ansatzes;
c) thermisches Verfestigen des Vorformlings, so dass eine Messmasse erhalten wird, die aus einem leitfähigen Netz besteht, das aus leitfähigen Partikeln und aus einer keramischen Phase besteht;
d) optional, Fixieren der Messmasse auf einem Träger und/oder Fixieren einer Grenzflächenschicht auf der Messmasse und/oder auf dem Träger,

wobei die keramischen Partikel, Vorstufen von keramischen Partikeln, leitfähigen Partikel und Vorstufen von leitfähigen Partikeln so gewählt sind, dass nach dem Schritt c) oder dem Schritt d) ein Sensor nach einem der vorhergehenden Ansprüche erhalten wird.

11. Herstellungsverfahren nach dem unmittelbar vorhergehenden Anspruch, bei dem das Substrat ein poröser Körper ist, der eine ausgerichtete offene Porosität von volumenmäßig mehr als 30 % aufweist, und/oder faserig ist, und bei dem im Schritt b),

 - auf Poren im Inneren des porösen Körpers Vorstufen von metallischen Partikeln oder Vorstufen von leitfähigen Partikeln aus einem keramischen Material aufgebracht werden, dann die Vorstufen thermisch oder chemisch reduziert werden, um leitfähige Partikel zu bilden, oder
 - auf Poren im Inneren des porösen Körpers ein Schlicker aufgebracht wird, der aus metallischen Partikeln oder aus leitfähigen Partikeln aus einem keramischen Material in Suspension in einem Lösungsmittel besteht, dann das Lösungsmittel verdampft wird,

so dass ein leitfähiges Netz gebildet wird,
wobei bei dem Verfahren nach dem Aufbringen der leitfähigen Partikel eine Schicht aus einem keramischen Material auf das leitfähige Netz aufgebracht wird und die Schicht bevorzugt gesintert wird.

12. Vorrichtung, die ein Zielwerkstück und einen Sensor nach einem der Ansprüche 1 bis 9 umfasst, wobei der Sensor auf dem Zielwerkstück fixiert ist oder in das Zielwerkstück integriert ist, damit sich das leitfähige Netz unter der Einwirkung einer auf das Zielwerkstück ausgeübten Belastung verformt.

13. Vorrichtung nach dem unmittelbar vorhergehenden Anspruch, bei der das Zielwerkstück aus einer Gruppe gewählt ist, die aus einem feuerfesten Ziegel, einem keramischen Teil eines Solarabsorbers, einem Backstein, einem feuerfesten Ofenblock, einem Teil zum Schutz vor Abrieb, einem gebundenen Schleifmittel, einem Schneidwerkzeug aus Keramik, einem Pumpen- oder Hydraulikkreiselement aus Keramik, einem elektrischen isolierenden Sockel oder Rohr aus Keramik, einer Keramikfliese oder einem Verblendteil aus Keramik oder Glaskeramik, einem Rohr, das ein glaskeramisches Material umfasst, einem Bremsbelag oder einer Bremsscheibe oder einem Gegenstand aus Keramik einer Bremsvorrichtung, einer Verglasung, einem Filter zur Flüssigkeits- oder Gasfiltration, einem Radom gebildet wird.

14. Set, umfassend

    - eine Vorrichtung nach einem der beiden unmittelbar vorhergehenden Ansprüche, und
    - ein Messgerät, das geeignet ist, nach dem Anschließen zwischen zwei Anschlussklemmen des leitfähigen Netzes oder kontaktlos, eine elektrische Eigenschaft des leitfähigen Netzes zu messen.

15. Verfahren zur Überwachung des physikalischen Zustands eines Zielwerkstücks, wobei das Verfahren die folgenden Schritte umfasst:

    1) zu einem Ausgangszeitpunkt, Fixieren eines Sensors nach einem der Ansprüche 1 bis 9 auf dem Zielwerkstück oder Integrieren eines Sensors nach einem der Ansprüche 1 bis 9 in das Zielwerkstück, so dass eine Vorrichtung nach einem der Ansprüche 12 und 13 gebildet wird;
    2) Kalibrieren der Vorrichtung derart, dass eine Beziehung zwischen dem physikalischen Zustand und einer elektrischen Eigenschaft des leitfähigen Netzes des Sensors bestimmt wird;
    3) Inbetriebnehmen der Vorrichtung in einer Umgebung bei einer Betriebstemperatur, dann, zu einem aktualisierten Zeitpunkt, Messen der Eigenschaft bei der Betriebstemperatur und, ausgehend von der Beziehung, Bestimmen des physikalischen Zustands zu dem aktualisierten Zeitpunkt.

16. Überwachungsverfahren nach dem unmittelbar vorhergehenden Anspruch, bei dem die Betriebstemperatur mehr als 400 °C beträgt und bei dem das Bestimmen des physikalischen Zustands ein Detektieren eines Mikrorisses und/oder ein Detektieren oder ein Messen einer Ermüdung des Zielwerkstücks umfasst.

17. Überwachungsverfahren nach einem der beiden unmittelbar vorhergehenden Ansprüche, bei dem das Kalibrieren ausgehend von Messungen der elektrischen Eigenschaft erfolgt, die bei der Betriebstemperatur ausgeführt werden.

**Claims**

1. Sensor intended to monitor a target piece, the sensor comprising:

    - a set of electrically conductive particles (6), at least a portion of the conductive particles constituting a conductive network (7) of which one electrical property is a function of an arrangement of the conductive particles constituting the conductive network, said arrangement being modifiable,
    - a ceramic phase (4) of protection of the conductive network, the ceramic phase being composed of ceramic particles, the ceramic phase comprising more than 90% of ceramic particles having a length of between 0.1 and 100 $\mu$m, called "fine ceramic particles", as a percentage by number,

    the ceramic particles being made of a material exhibiting an electrical resistivity, measured at 20°C, greater than 1 S2.m, the arrangement of the conductive particles being "modifiable" in that, under the effect of a strain, the arrangement of the conductive particles of the conductive network is modified such that the result thereof is a modification of the impedance of the conductive network,
    the sensor being **characterized in that**:

    - the sensor is intended to monitor a target piece at a temperature greater than 400°C,
    - more than 90% of the conductive particles, called "elongated conductive particles", as a percentage by number, have a form factor greater than 2 and a thickness less than 20 000 nanometres, the form ratio of a particle being equal to the ratio of the length of said particle divided by the thickness of said particle, and
    - the conductive particles are made of a material exhibiting an electrical resistivity, measured at 20°C, less than 1 mS2.m.

2. Sensor according to the preceding claim, wherein the elongate conductive particles have a thickness less than 1000 nanometres, the length of said conductive particles is less than 1000 nanometres, and more than 90% of the elongate conductive particles, as a percentage by number, have a form factor greater than 5.

3. Sensor according to the immediately preceding claim, wherein more than 90% of the elongate conductive particles, as a percentage by number, have a form factor greater than 100, and wherein the elongate conductive particles have a thickness less than 500 nanometres.

4. Sensor according to any one of the preceding claims, wherein at least the elongate conductive particle are

- particles, preferably fibres, made of a metal or of a metalloid, preferably of platinum, and/or
- carbon nanotubes and/or composite particles comprising a non-conductive central core coated with an at least partial coating made of a metal or of a metalloid, and/or
- composite particles comprising a ceramic central core functionalised in its mass so as to be electrically conductive, and/or

wherein the ceramic phase is composed, for more than 80% of its weight, of one or more compounds chosen from the group formed by $Al_2O_3$, $ZrO_2$, $Cr_2O_3$; MgO, CaO, $SiO_2$, $\alpha$ or $\beta$ SiC, BN, $B_4C$, C in the form of diamond, $Si_3N_4$, AlN, and the silicon oxynitrides including SiAlON.

5. Sensor according to the immediately preceding claim, wherein the elongate conductive particles are composed, for more than 80% of their weight, of one or more constituents chosen from the group formed by Ag, Al, Au, Cu, Fe, Ge, Mo, Ni, Pd, Pt, Rh, Si, Ta, Ti, W, graphite, graphene, $TiB_2$, TiC, TiN, $ZrB_2$, ZrC, ZrN, $VB_2$, VC, VN, $CrB_2$, CrBN and WC.

6. Sensor according to any one of the preceding claims, wherein

- the elongate conductive particles of the conductive network are distributed homogeneously in the ceramic phase, or
- the elongate conductive particles of the conductive network are distributed in at least one layer, called "conductive layer", and the ceramic particles of the ceramic phase are distributed in at least one layer, called "ceramic layer", said conductive and ceramic layers being superposed one on top of the other.

7. Sensor according to any one of the preceding claims, wherein the elongate conductive particles and/or the fine ceramic particles and/or the conductive network (7) exhibit a preferential orientation, and/or wherein the conductive network forms a circuit closed on itself.

8. Sensor according to any one of the preceding claims, wherein the ceramic phase forms a continuous layer interposed between the conductive network and the outside environment of the sensor.

9. Sensor according to any one of the preceding claims,

- comprising a fibrous ceramic phase in which the conductive particles of the conductive network are dispersed, and/or
- comprising a fabric, the conductive particles being fixed to threads of said fabric and/or incorporated in threads of said fabric and/or constituting threads of said fabric,

in which sensor the ceramic phase is sintered.

10. Method for manufacturing a sensor according to any one of the preceding claims, intended to monitor the physical state of a target piece, the method comprising the following steps:

a) preparation of a starting charge

- in the form (a1) of a slurry comprising

- ceramic particles and/or precursors of ceramic particles, and
- conductive particles and/or precursors of conductive particles; or
- in the form (a2) of a first slurry comprising ceramic particles and/or precursors of ceramic particles, and of a second slurry, different from the first slurry, comprising conductive particles and/or precursors of conductive particles; or

- in the form (a3) of a powder comprising

- ceramic particles and/or precursors of ceramic particles, and
- conductive particles and/or precursors of conductive particles; or

- in the form (a4) of a first powder comprising ceramic particles and/or precursors of ceramic particles, and of a second powder, different from the first powder, comprising conductive particles and/or precursors of conductive particles; or
- in the form (a5) of a slurry comprising conductive particles and/or precursors of conductive particles; or
- in the form (a6) of a powder comprising conductive particles and/or precursors of conductive particles; or
- in the form (a7) of a slurry comprising ceramic particles and/or precursors of ceramic particles, to which conductive particles and/or precursors of conductive particles are fixed; or

- in the form (a8) of a powder comprising ceramic particles and/or precursors of ceramic particles, to which conductive particles and/or precursors of conductive particles are fixed;

b) shaping of the starting charge so as to obtain a preform, said shaping being

(b1) by deposition of the starting charge, preferably in the form of one or more layers, preferably, when the starting charge is in form (a1), (a2), (a5) or (a7), by pouring in strips or by spraying, preferably by pouring in strips, preferably to a thickness of between 0.05 and 3 mm, on a temporary or definitive substrate, preferably on a raw part of the target piece or on the target piece, or (b2) by incorporation of the starting charge in the mass of a substrate, preferably in a raw part of the target piece or in the target piece, preferably, when the starting charge is in the form (a1), (a2) or (a5), by impregnation of the substrate, or (b3) when the starting charge is in the form (a1), (a3), (a7) or (a8), by shaping of the starting charge in the form of the target piece or of a raw part of the target piece,

then, if the shaped starting charge comprises a liquid phase, drying of the shaped starting charge; c) thermal consolidation of the preform so as to obtain a measurement mass composed of a conductive network composed of the conductive particles and of a ceramic phase; d) optionally, fixing of the measurement mass onto a support and/or fixing of an interfacing layer onto the measurement mass and/or onto the support,

the ceramic particles, precursors of ceramic particles, conductive particles and precursors of conductive particles being chosen so as to obtain, at the end of the step c) or of the step d), a sensor according to any one of the preceding claims.

11. Manufacturing method according to the immediately preceding claim, wherein the substrate is a porous body having an oriented open porosity greater than 30% by volume and/or is fibrous, and wherein, in the step b),

- precursors of metallic particles or precursors of conductive particles made of a ceramic material are deposited on pores inside the porous body, then said precursors are thermally or chemically reduced to constitute the conductive particles, or
- a slurry composed of metallic particles or of conductive particles made of a ceramic material, in suspension in a solvent, is deposited on pores inside of the porous body, then the solvent is evaporated,

so as to constitute a conductive network, in which method, after deposition of the conductive particles, a layer made of a ceramic material is deposited on the conductive network, and, preferably, said layer is sintered.

12. Device comprising a target piece and a sensor according to any one of Claims 1 to 9, the sensor being fixed onto the target piece or incorporated in the target piece, so that the conductive network deforms under the effect of a stress applied to the target piece.

13. Device according to the immediately preceding claim, wherein the target piece is chosen from a group composed or a refractory tile, a ceramic piece of a solar absorber, a kiln furniture, a refractory oven block, an abrasion-protection piece, an agglomerate abrasive, a ceramic cutting tool, a ceramic pump or hydraulic circuit element, a ceramic electrically insulating support or tube, a ceramic tile or a ceramic or vitreous ceramic face piece, a plate, a tube comprising a vitreous ceramic material, a wafer or a brake disc or a ceramic object of a braking device, a glazing, a filter for liquid or gaseous filtration, or a radome.

14. Kit comprising

- a device according to either one of the two immediately preceding claims, and
- a measurement device suitable for measuring, after connection between two connection terminals of the conductive network or without contact, an electrical property of the conductive network.

15. Method for monitoring the physical state of a target piece, said method comprising the following steps:

1) at an initial time, fixing of a sensor according to any one of Claims 1 to 9 onto the target piece or incorporation of a sensor according to any one of Claims 1 to 9 in the target piece, so as to constitute a device according to either one of Claims 12 and 13; 2) calibration of the device so as to determine a relationship between said physical state and an electrical property of the conductive network of the sensor; 3) placing the device in service in an environment at a service temperature, then, at an update time, measurement of said property at said

service temperature and, from said relationship, determination of said physical state at the update time.

16. Monitoring method according to the immediately preceding claim, wherein the service temperature is greater than 400°C, and wherein the determination of said physical state comprises a detection of a microcracking and/or a detection or a measurement of a fatigue of the target piece.

17. Monitoring method according to either one of the two immediately preceding claims, wherein the calibration is performed from measurements of the electrical property taken at said service temperature.

[Fig 1]

[Fig 2]

[Fig 3]

[Fig 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017009256 A1
- US 2001020694 A1
- EP 1340970 A1
- US 2009121374 A
- FR 3062385 A1
- FR 2942874 A1

- WO 2004065926 A
- WO 2017009256 A
- WO 2010003389 A2
- US 5681617 A
- WO 2015011623 A1

**Littérature non-brevet citée dans la description**

- **R. LUHN ; E. ZIMMERMANN ; G. KÔHLER, JENA.** Anorganische Hochtemperaturklebstoffe - Anwendungsmöglichkeiten und Grenzen. *Schweißen und Schneiden 2000 Vorträge der gleichnamigen Großen Schweißtechnischen Tagung in Nürnberg vom 27. bis 29. September 2000,* 27 Septembre 2000, 249-252